(19) Europäisches Patentamt
European Patent Office
Office européen des brevets

(11) **EP 4 752 654 A1**

(12) **EUROPEAN PATENT APPLICATION**

(43) Date of publication:
**03.06.2026 Bulletin 2026/23**

(21) Application number: **25210917.8**

(22) Date of filing: **23.10.2025**

(51) International Patent Classification (IPC):
**G05B 19/406** (2006.01)    **G05B 19/4065** (2006.01)

(52) Cooperative Patent Classification (CPC):
**G05B 19/406; G05B 19/4065;** G05B 2219/37234;
G05B 2219/37246

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.11.2024 JP 2024208495**

(71) Applicant: **Brother Kogyo Kabushiki Kaisha
Nagoya-shi, Aichi 467-8561 (JP)**

(72) Inventor: **TERADA, Yuzuru
Nagoya, 467-8562 (JP)**

(74) Representative: **Prüfer & Partner mbB
Patentanwälte · Rechtsanwälte
Sohnckestraße 12
81479 München (DE)**

(54) **NUMERICAL CONTROL DEVICE, MACHINE TOOL, CONTROL METHOD, PROGRAM, AND STORAGE MEDIUM**

(57)    A numerical control device comprising a controller configured to control a machine tool. The controller is configured to execute reading a first command indicating an acquisition start time for starting acquisition of a machining load in machining of the workpiece and a second command indicating an acquisition end time for ending the acquisition of the machining load, determining whether a fixed cycle command for executing the same machining at a plurality of different positions of the workpiece is present in a period from when the first command is read to when the second command is read, and monitoring for each of the same machining in the fixed cycle command in a case where it is determined in the determining that the fixed cycle command is present, the monitoring including acquiring the machining load, and monitoring based on the machining load acquired in the acquiring.

*FIG. 2*

## Description

### TECHNICAL FIELD

The present invention relates to a numerical control device, a machine tool, a control method, a program, and a storage medium.

### BACKGROUND

A detection device described in Patent Literature 1 monitors a machining load of a tool. The detection device includes an actual machining load amount acquisition unit and a detection unit. The actual machining load amount acquisition unit acquires, as the machining load, an amount of a load of the tool during execution of an idle feed operation and an actual machining operation. The idle feed operation is an operation mode in which a workpiece is not machined with the tool. The actual machining operation is an operation mode in which the workpiece is machined with the tool. When the idle feed operation is executed, the detection unit detects whether the machining load exceeds an idle feed threshold value. When the actual machining operation is executed, the detection unit detects whether the machining load exceeds an actual machining threshold value.

### Citation List

### Patent Literature

Patent Literature 1: JP2021-64128A

### SUMMARY

### Technical Problem

In the above detection device, cutting feed of the tool is performed in the actual machining operation, and a time difference occurs until the tool comes into contact with the workpiece in a period of the cutting feed. In this case, the detection device cannot monitor, for example, a machining load for only the period during which the tool and the workpiece are in contact with each other during the period of the cutting feed of the actual machining operation.

An object of the present invention is to provide a numerical control device, a machine tool, a control method, a program, and a storage medium capable of monitoring a machining load acquired in a desired period in machining of a workpiece.

### Solution to Problem

A numerical control device according to a first aspect of the present invention including a controller configured to control a machine tool that machines a workpiece with a tool based on an NC program, in which the controller is configured to execute a reading process of reading, from among commands of the NC program, a first command indicating an acquisition start time for starting acquisition of a machining load in machining of the workpiece and a second command indicating an acquisition end time for ending the acquisition of the machining load, a first determination process of determining whether a fixed cycle command for executing the same machining at a plurality of different positions of the workpiece is present in a period from when the first command is read in the reading process to when the second command is read in the reading process, and a cycle monitoring process of executing monitoring for each of the same machining in the fixed cycle command in a case where it is determined in the first determination process that the fixed cycle command is present, the cycle monitoring process including a first load acquisition process of acquiring the machining load, and a first monitoring process of executing monitoring based on the machining load acquired in the first load acquisition process. The above numerical control device can monitor the machining load acquired in a desired period.

In the numerical control device of the present invention, in the first monitoring process, the machining load acquired in the first load acquisition process may be monitored in the same machining in the fixed cycle command based on a reference machining load stored in a storage device and serving as a reference of the monitoring for the same machining in the fixed cycle command. The numerical control device monitors the machining load based on the same reference machining load in the same machining of the fixed cycle command. Therefore, the numerical control device can prevent a capacity shortage of the storage device as compared with a case where the storage device stores a machining load serving as a reference of the monitoring for all the machining in the fixed cycle command.

In the numerical control device of the present invention, in the first load acquisition process, the acquisition of the machining load may be started after completion of positioning movement of one or both of the tool and the workpiece, the positioning movement being performed prior to first cutting movement in the fixed cycle command. The numerical control device can align a start timing of the acquisition of the machining load in the machining of the fixed cycle command. Therefore, the numerical control device can correctly monitor the machining load for each machining of the fixed cycle command.

In the numerical control device of the present invention, the controller may be configured to execute a second determination process of determining whether a cutting feed command for executing cutting feed is issued before the fixed cycle command in a period from when the first command is read in the reading process to when the second command is read in the reading process, and in a case where it is determined in the second determination process that the cutting feed command is issued before the fixed cycle command, instead of executing the monitoring by the cycle monitoring process, execute a second load acquisition process of acquiring the machining load during the cutting feed, and a second monitoring process of executing monitoring based on the machining load acquired in the second load acquisition process. The numerical control device can monitor the machining load for the cutting feed in a case where the cutting feed command is issued before the fixed cycle command.

In the numerical control device of the present invention, the fixed cycle command includes a machining command for determining a machining condition, the numerical control device further includes a third determination process of determining whether the fixed cycle command or the machining command of a type different from the same machining in the fixed cycle command is issued after the fixed cycle command in a period from when the first command is read in the reading process to when the second command is read in the reading process, and the first load acquisition process may end the acquisition of the machining load in a case where it is determined in the third determination process that the fixed cycle command or the machining command of a type different from the same machining is issued after the fixed cycle command. The numerical control device ends the acquisition of the machining load in a case where machining different from the same machining in the fixed cycle command is issued after the fixed cycle command. Therefore, the numerical control device can prevent monitoring of machining based on the machining load in the machining different from the same machining in the fixed cycle command.

In the numerical control device of the present invention, the fixed cycle command may include a first cycle command and a second cycle command different from the first cycle command, and the controller may be configured to execute a third load acquisition process of acquiring the reference machining load from when the first cycle command is read to when the second cycle command is read in a period from when the first command is read in the reading process to when the second command is read in the reading process, and a storage control process of storing the reference machining load acquired by the third load acquisition process in the storage device. The numerical control device can monitor the machining load based on the reference machining load.

In the numerical control device of the present invention, the controller may be configured to execute a first setting process of setting a monitoring start time for starting monitoring of the machining load by the first monitoring process in a period from when the first cycle command is read to when the second cycle command is read based on the reference machining load stored in the storage control process, and a second setting process of setting a monitoring end time for ending the monitoring of the machining load by the first monitoring process in a period from when the first cycle command is read to when the second cycle command is read based on the reference machining load stored in the storage control process, and in the first monitoring process, the machining load acquired in the first load acquisition process may be monitored in a period from the monitoring start time set in the first setting process to the monitoring end time set in the second setting process. The numerical control device can execute the monitoring of, among the acquired machining loads, a machining load for a period required for the monitoring from the monitoring start time to the monitoring end time.

In the numerical control device of the present invention, the controller may be configured to execute a third setting process of setting an upper limit load based on the reference machining load stored in the storage control process, and a fourth setting process of setting a lower limit load based on the reference machining load stored in the storage control process, and in the first monitoring process, the machining load acquired in the first load acquisition process may be monitored based on the upper limit load set in the third setting process and the lower limit load set in the fourth setting process. The numerical control device can monitor the machining load based on the upper limit load and the lower limit load based on the reference machining load.

In the numerical control device of the present invention, the first monitoring process may include a first notification control process of notifying an abnormality of the machining load in a case where it is determined that the machining load acquired in the first load acquisition process is larger than the upper limit load set in the third setting process, and a second notification control process of notifying an abnormality of the machining load in a case where it is determined that the machining load acquired in the first load acquisition process is lower than the lower limit load set in the fourth setting process. An operator of the numerical control device can recognize the abnormality of the machining load.

In the numerical control device of the present invention, the controller may be configured to execute a third setting process of setting an upper limit load based on the reference machining load stored in the storage control process, and the first monitoring process may include a first notification control process of notifying an abnormality of the machining load in a case where it is determined that the machining load acquired in the first load acquisition process is larger than the upper limit load set in the third setting process. The operator of the numerical control device can recognize the abnormality of the machining load.

In the numerical control device of the present invention, the controller may be configured to execute a fourth setting process of setting a lower limit load based on the reference machining load stored in the storage control process, and the first monitoring process may include a second notification control process of notifying an abnormality of the machining load in a case where it is determined that the machining load acquired in the first load acquisition process is lower than the lower limit load set in the fourth setting process. The operator of the numerical control device can recognize the abnormality of the machining load.

In the numerical control device of the present invention, the controller may be configured to execute a display control process of displaying the reference machining load stored in the storage control process, the upper limit load set in the third setting process, the lower limit load set in the fourth setting process, and the machining load acquired in the first load acquisition process on a display unit in an overlapping manner. In the numerical control device, the operator can visually confirm the machining load.

In the numerical control device of the present invention, the upper limit load is calculated based on the reference machining load and an upper limit machining load which is a predetermined offset amount, the lower limit load is calculated based on the reference machining load and a lower limit machining load which is a predetermined offset amount, the controller may be configured to execute a first correction process of correcting the upper limit machining load based on a change amount of the reference machining load with respect to a sampling time of the reference machining load, and a second correction process of correcting the lower limit machining load set in the fourth setting process based on the change amount, in the third setting process, a value calculated based on the reference machining load and the corrected upper limit machining load may be set as the upper limit load, and in the fourth setting process, a value calculated based on the reference machining load and the corrected lower limit machining load may be set as the lower limit load. The numerical control device can appropriately correct the upper limit machining load and the lower limit machining load based on a magnitude of the change amount of the reference machining load.

In the numerical control device of the present invention, in the third load acquisition process, the reference machining load may be acquired for each tool used in the machining of the workpiece based on the NC program, in the storage control process, the reference machining load acquired for each tool in the third load acquisition process may be stored in association with each corresponding tool, in the first load acquisition process, the machining load in a case where the workpiece is machined with any specific tool among the tools may be acquired, and in the first monitoring process, the machining load acquired in the first load acquisition process may be monitored based on the reference machining load associated with the specific tool among the reference machining loads stored in the storage control process in association with each tool. The numerical control device can monitor the machining load based on the reference machining load associated with each tool.

A machine tool according to a second aspect of the present invention is a machine tool including a controller configured to machine a workpiece with a tool based on an NC program, in which the controller is configured to execute a reading process of reading, from among commands of the NC program, a first command indicating an acquisition start time for starting acquisition of a machining load in machining of the workpiece and a second command indicating an acquisition end time for ending the acquisition of the machining load, a first determination process of determining whether a fixed cycle command for executing the same machining at a plurality of different positions of the workpiece is present in a period from when the first command is read in the reading process to when the second command is read in the reading process, and a cycle monitoring process of executing monitoring for each of the same machining in the fixed cycle command in a case where it is determined in the first determination process that the fixed cycle command is present, the cycle monitoring process including a first load acquisition process of acquiring the machining load, and a first monitoring process of executing monitoring based on the machining load acquired in the first load acquisition process.

A control method according to a third aspect of the present invention is a control method for a numerical control device for controlling a machine tool that machines a workpiece with a tool based on an NC program, the control method includes executing a reading step of reading, from among commands of the NC program, a first command indicating an acquisition start time for starting acquisition of a machining load in machining of the workpiece and a second command indicating an acquisition end time for ending the acquisition of the machining load, a first determination step of determining whether a fixed cycle command for executing the same machining at a plurality of different positions of the workpiece is present in a period from when the first command is read in the reading step to when the second command is read in the reading step, and a cycle monitoring step of executing monitoring for each of the same machining in the fixed cycle command in a case where it is determined in the first determination step that the fixed cycle command is present. In the control method, the cycle monitoring step includes a first load acquisition step of acquiring the machining load, and a first monitoring step of executing monitoring based on the machining load acquired in the first load acquisition step.

A program according to a fourth aspect of the present invention is a program for causing a computer, in a numerical control device for controlling a machine tool that machines a workpiece with a tool based on an NC program, to execute a reading step of reading, from among commands of the NC program, a first command indicating an acquisition start time for starting acquisition of a machining load in machining of the workpiece and a second command indicating an acquisition end time for ending the acquisition of the machining load, a first determination step of determining whether a fixed cycle command for executing the same machining at a plurality of different positions of the workpiece is present in a period from when the first command is read in the reading step to when the second command is read in the reading step, and a cycle monitoring step of executing monitoring for each of the same machining in the fixed cycle command in a case where it is determined in the first determination step that the fixed cycle command is present, the cycle monitoring step including a first load acquisition step of acquiring the machining load, and a first monitoring step of executing monitoring based on the machining load acquired in the first load acquisition step.

A storage medium according to a fifth aspect of the present invention is a storage medium for storing a program for causing a computer, in a numerical control device for controlling a machine tool that machines a workpiece with a tool based on an NC program, to execute a reading step of reading, from among commands of the NC program, a first command indicating an acquisition start time for starting acquisition of a machining load in machining of the workpiece and a second command indicating an acquisition end time for ending the acquisition of the machining load, a first determination step of determining whether a fixed cycle command for executing the same machining at a plurality of different positions of the workpiece is present in a period from when the first command is read in the reading step to when the second command is read in the reading step, and a cycle monitoring step of executing monitoring for each of the same machining in the fixed cycle command in a case where it is determined in the first determination step that the fixed cycle command is present, the cycle monitoring step including a first load acquisition step of acquiring the machining load, and a first monitoring step of executing monitoring based on the machining load acquired in the first load acquisition step.

The second aspect, the third aspect, the fourth aspect, and the fifth aspect exhibit the same effect as that of the first aspect.

## BRIEF DESCRIPTION OF THE DRAWINGS

[FIG. 1] FIG. 1 is a front view of a machine tool 1.

[FIG. 2] FIG. 2 is a block diagram illustrating an electrical configuration of the machine tool 1.

[FIG. 3] FIG. 3 is a diagram illustrating an NC program P1.

[FIG. 4] FIG. 4 is a diagram illustrating an NC program P2.

[FIG. 5] FIG. 5 is a diagram illustrating an NC program P3.

[FIG. 6] FIG. 6 is a diagram illustrating an NC program P4.

[FIG. 7] FIG. 7 is a diagram illustrating a tool 4 that moves based on a fixed cycle instruction.

[FIG. 8] FIG. 8 is a diagram illustrating waveforms of a machining load Fm and a reference machining load Fr.

[FIG. 9] FIG. 9 is a flowchart of a trial machining process.

[FIG. 10] FIG. 10 is a flowchart of a main process.

[FIG. 11] FIG. 11 is a flowchart of the main process and is a continuation of FIG. 10.

[FIG. 12] FIG. 12 is a flowchart of the main process and is a continuation of FIG. 10.

[FIG. 13] FIG. 13 is a flowchart of a relative monitoring process.

[FIG. 14] FIG. 14 is a diagram illustrating a change amount of the reference machining load Fr with respect to a sampling time.

[FIG. 15] FIG. 15 is a diagram illustrating a relation between an upper limit load Fh and lower limit load Fl before correction and the reference machining load Fr.

[FIG. 16] FIG. 16 is a diagram illustrating a relation between a corrected upper limit load Fh and lower limit load Fl and the reference machining load Fr.

## DETAILED DESCRIPTION

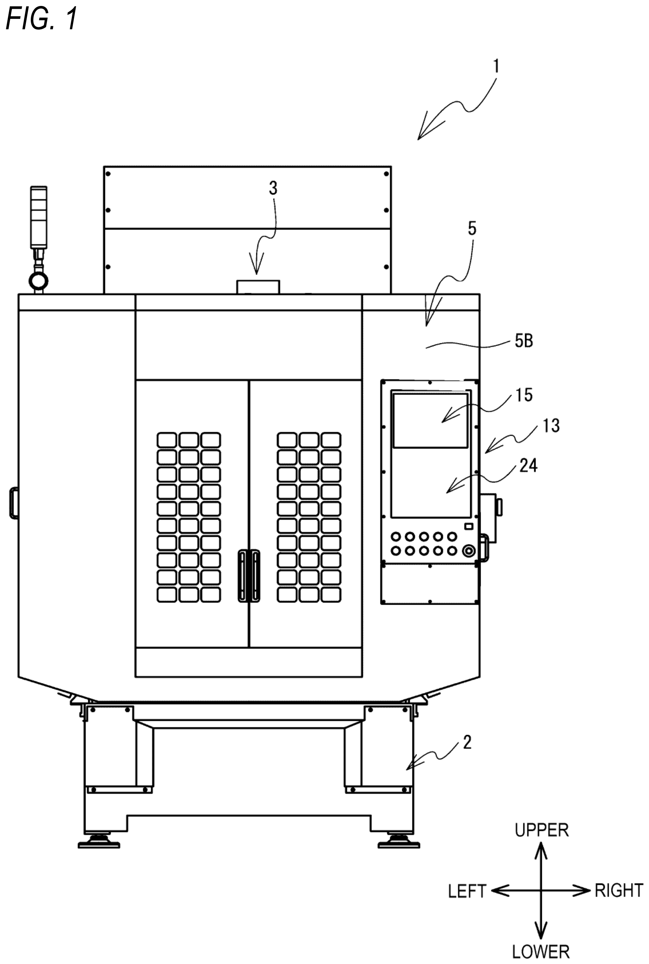

A machine tool 1 according to the present invention will be described with reference to FIG. 1. An upper side, a lower side, a left side, a right side, a front side, and a rear side of FIG. 1 are respectively defined as an upper side, a lower side, a left side, a right side, a front side, and a back side of the machine tool 1. A left-right direction, a front-rear direction, and an up-down direction of the machine tool 1 are an X-axis direction, a Y-axis direction, and a Z-axis direction of the machine tool 1, respectively. A rightward direction, a frontward direction, and an upward direction are positive directions, and a leftward direction, a rearward direction, and a downward direction are negative directions.

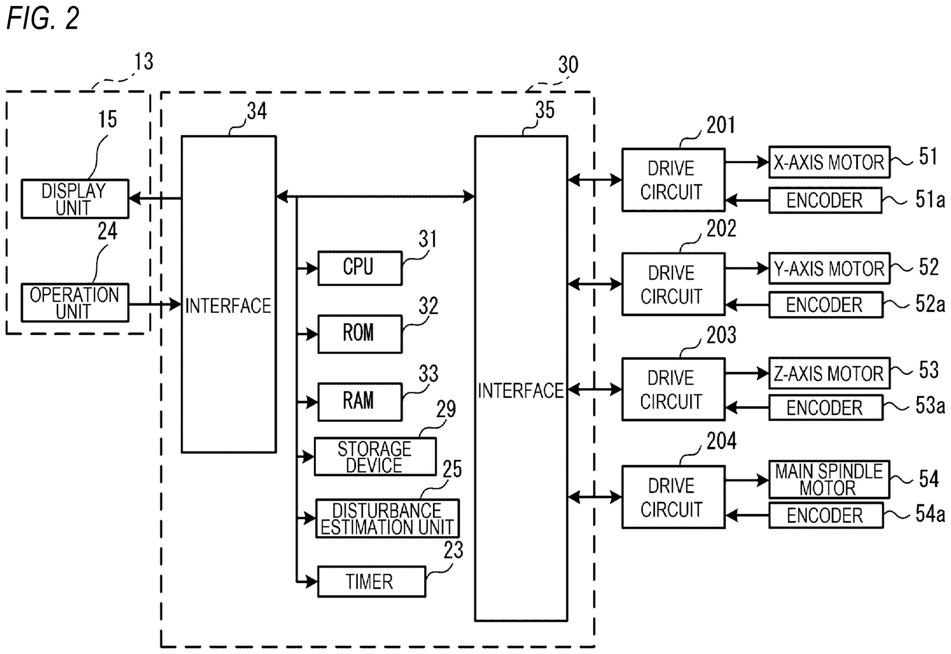

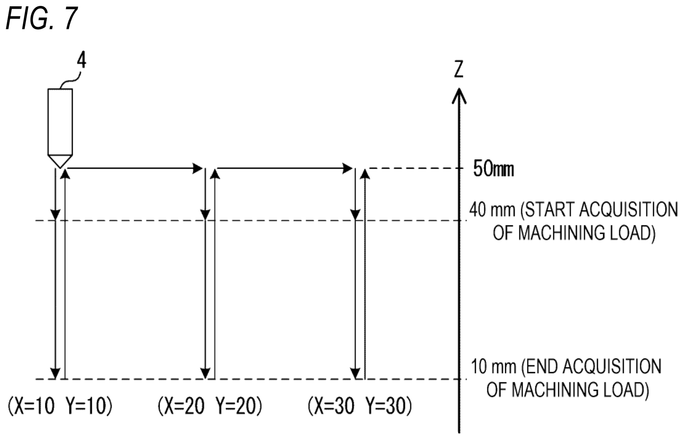

The machine tool 1 causes a tool 4 illustrated in FIG. 7 to rotate to perform cutting on a workpiece (not illustrated). The machine tool 1 is a vertical machine tool whose main spindle (not illustrated) extends in the Z-axis direction. The machine tool 1 includes a base portion 2, a machining table (not illustrated), a machine main body 3, a cover 5, a storage box (not illustrated), and an operation panel 13 illustrated in FIG. 2.

The base portion 2 is an iron base. The machining table is disposed at an upper front portion of the base portion 2. The workpiece is fixed to an upper surface of the machining table. The machine main body 3 is disposed at an upper rear portion of the base portion 2. The machine main body 3 has a main spindle. The tool 4 can be attached to the main spindle.

The cover 5 is fixed to an upper portion of the base portion 2. The cover 5 surrounds the machine main body 3 and the machining table. The storage box is located behind the cover 5. The storage box stores a numerical control device 30 illustrated in FIG. 2. The numerical control device 30 controls an operation of the machine tool 1.

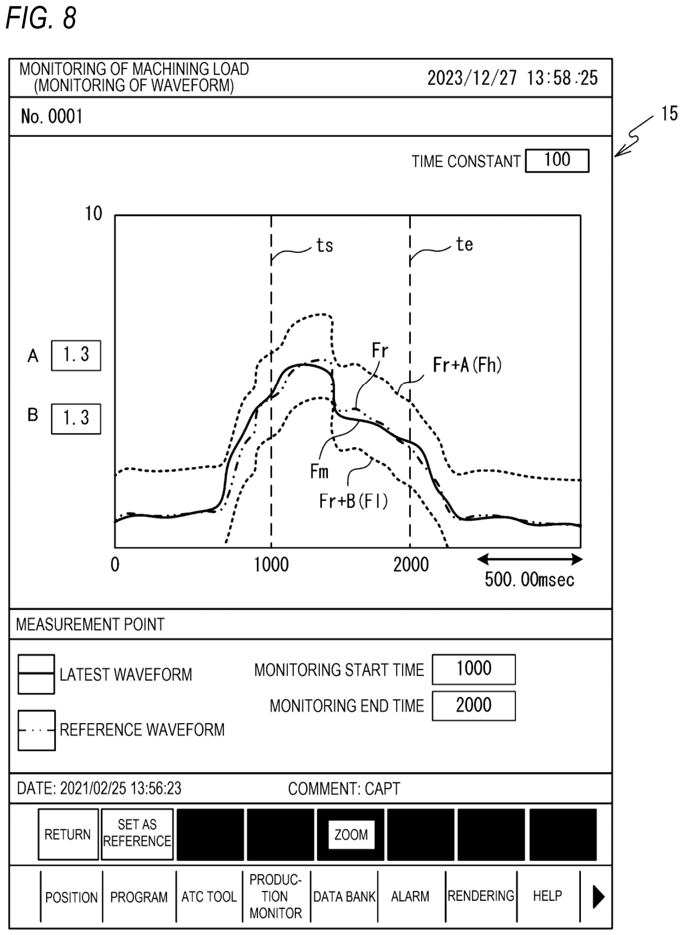

The operation panel 13 is disposed on a right portion of a front surface 5B of the cover 5. The operation panel 13 includes a display unit 15 and an operation unit 24. The display unit 15 displays a setting screen. On the setting screen, selection of various programs, setting of machining conditions of an NC program, and the like are performed. In addition, the display unit 15 displays a waveform of a machining load Fm illustrated in FIG. 8 to be described later.

The operation unit 24 is used by an operator to input settings of various operations and the like to the machine tool 1. The operator performs the selection of various programs, the setting of machining conditions of an NC program, and the like by operating the operation unit 24 while confirming the display unit 15.

An electrical configuration of the machine tool 1 will be described with reference to FIG. 2. The machine tool 1 includes the numerical control device 30, the operation panel 13, drive circuits 201 to 204, an X-axis motor 51, a Y-axis motor 52, a Z-axis motor 53, a main spindle motor 54, and the like. The numerical control device 30 includes a CPU 31, a ROM 32, a RAM 33, a timer 23, a storage device 29, a disturbance estimation unit 25, and interfaces 34 and 35.

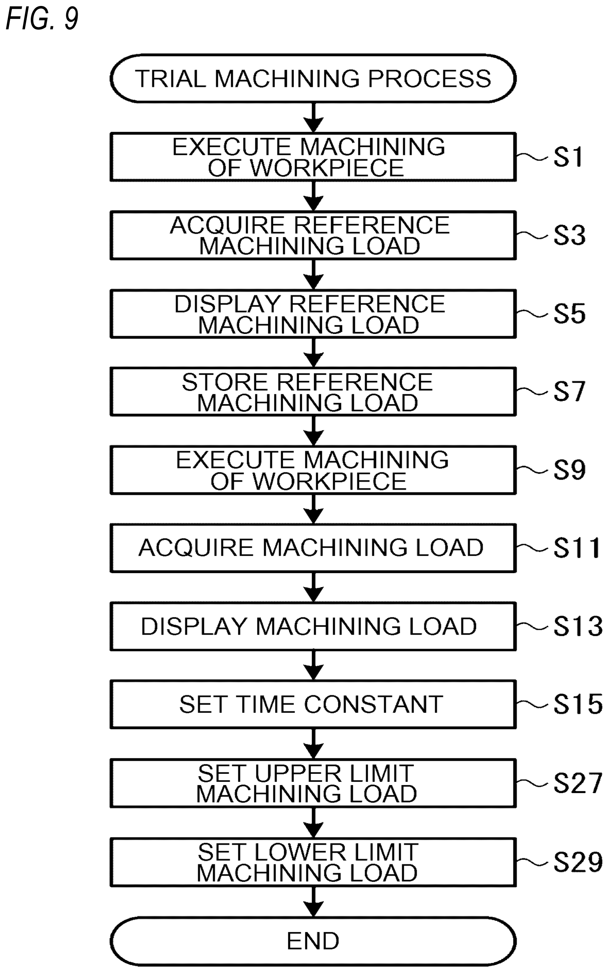

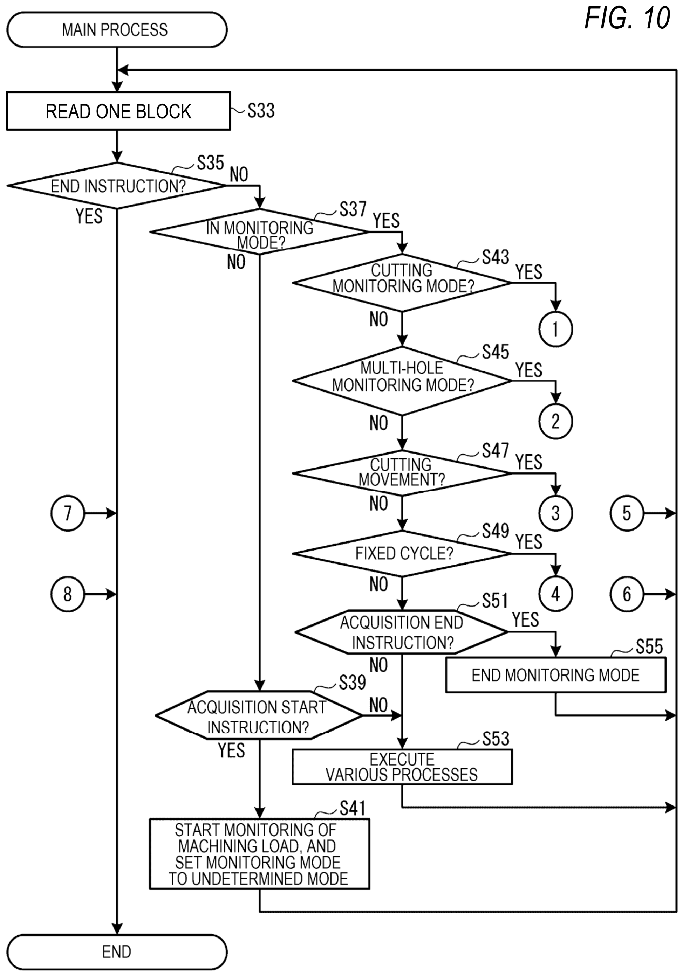

The CPU 31 comprehensively controls the operation of the machine tool 1. The ROM 32 stores various programs such as a trial machining program and a monitoring program. The trial machining program executes a trial machining process (see FIG. 9) to be described later. The monitoring program executes a main process (see FIG. 10) to be described later. The RAM 33 temporarily stores various data and the like.

The storage device 29 is non-volatile and stores NC programs P1 to P4 to be described later. The storage device 29 further stores a reference machining load Fr to be described later.

The disturbance estimation unit 25 estimates, for example, an estimated disturbance force of the main spindle motor 54. A known method may be used for this estimation, and for example, the estimation may be performed based on information such as an output torque, an inertia, an angular acceleration, a viscosity, an angular velocity, and a Coulomb friction of the main spindle motor 54. The estimated disturbance force of the main spindle motor 54 is hereinafter referred to as the "machining load Fm".

As the machining load Fm, forces in the X-axis direction, the Y-axis direction, and the Z-axis direction applied to a workpiece to be measured by a force sensor may be used. As the machining load Fm, a torque around the main spindle applied to a workpiece to be measured by a torque sensor may be used. As the machining load Fm, a vibration amplitude and a vibration work in an X-axis, a Y-axis, or a Z-axis of a workpiece to be measured by an acceleration sensor may be used. As the machining load Fm, a vibration amplitude and a vibration work in the X-axis, the Y-axis, or the Z-axis of the machine main body 3 may be used.

The timer 23 measures, for example, an elapsed time from acquisition of the machining load Fm to the end of the acquisition. The display unit 15 and the operation unit 24 are connected to the CPU 31 via the interface 34. The display unit 15 displays various screens such as a waveform of the machining load Fm to be described later based on control of the CPU 31. The operation unit 24 receives operations such as various kinds of information and operation instructions by the operator and outputs the operations to the CPU 31. The drive circuits 201 to 204 are connected to the CPU 31 via the interface 35.

The drive circuit 201 is connected to the X-axis motor 51 and an encoder 51a. The drive circuit 201 controls rotation of the X-axis motor 51 based on the control of the CPU 31. The encoder 51a outputs rotation position information on the X-axis motor 51 to the drive circuit 201.

The drive circuit 202 is connected to the Y-axis motor 52 and an encoder 52a. The drive circuit 202 controls rotation of the Y-axis motor 52 based on the control of the CPU 31. The encoder 52a outputs rotation position information on the Y-axis motor 52 to the drive circuit 202.

The drive circuit 203 is connected to the Z-axis motor 53 and an encoder 53a. The drive circuit 203 controls rotation of the Z-axis motor 53 based on the control of the CPU 31. The encoder 53a outputs rotation position information on the Z-axis motor 53 to the drive circuit 203.

The drive circuit 204 is connected to the main spindle motor 54 and an encoder 54a. The drive circuit 204 controls rotation of the main spindle motor 54 based on the control of the CPU 31. The encoder 54a outputs rotation position information on the main spindle motor 54 to the drive circuit 204.

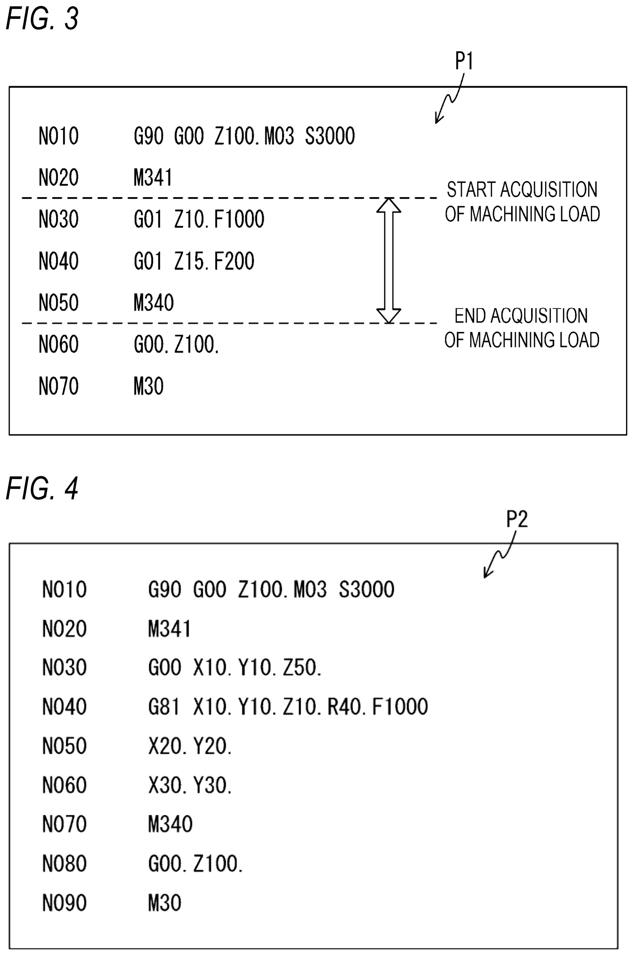

Control of the NC program and the numerical control device 30 will be described with reference to FIGS. 3 to 6. The NC program is a program for cutting a workpiece. In the trial machining process and main process to be described later, the workpiece is machined based on the NC program. In the trial machining process, the workpiece is experimentally machined before the workpiece is machined in the main process.

The NC program includes a plurality of blocks. Each block includes at least one control instruction such as a cutting feed instruction, a fast feed instruction, an acquisition start instruction, an acquisition end instruction, and an end instruction.

The cutting feed instruction is a control instruction for causing the main spindle to move at a specified feed speed. The fast feed instruction is a control instruction for causing the main spindle to move by fast feed. In the fast feed, the main spindle moves at a maximum speed of each of the X-axis motor 51, the Y-axis motor 52, and the Z-axis motor 53. The acquisition start instruction is a control instruction for starting the acquisition of the machining load Fm in the machining of the workpiece. The acquisition end instruction is a control instruction for ending the acquisition of the machining load Fm started by the acquisition start instruction. The end instruction is a control instruction for ending the execution of the NC program.

In the NC program, a line number and a control instruction are associated with each other. In the NC program P1, each line number is indicated by a number specified after N. In the main process to be described later, the control instructions are executed line by line in ascending order of line number. In the following description, a height of the workpiece is assumed to be, for example, a Z-axis position of 35 mm.

Machining based on the NC program P1 illustrated in FIG. 3 will be described. G00 in an N010-th line is a fast feed instruction, and the CPU 31 causes the main spindle to move by fast feed to a Z-axis position of 100 mm. In addition, in the N010-th line, the CPU 31 causes the main spindle to rotate at 3,000 rpm in accordance with a rotation speed S.

M341 in an N020-th line is an acquisition start instruction, and the CPU 31 starts the acquisition of the machining load Fm in the machining of the workpiece. More specifically, the CPU 31 acquires the machining load Fm from the disturbance estimation unit 25 over time. The CPU 31 executes a low-pass filter (LPF) process on the acquired machining load Fm to remove noise, and stores the machining load Fm in the storage device 29.

G01 in an N030-th line is a cutting feed instruction, and the CPU 31 causes the main spindle to move by cutting feed to a Z-axis position of 10 mm. In the present embodiment, a feed speed in the N030-th line is indicated by a combination of F and a number. The CPU 31 causes the main spindle to move at a speed of 1,000 mm per minute according to a cutting instruction of F1000.

An N040-th line is a cutting feed instruction, and the CPU 31 causes the main spindle to move by cutting feed to a Z-axis position of 15 mm. In the N040-th line, the feed speed is F200, and the CPU 31 causes the main spindle to move at a speed of 200 mm per minute according to a cutting instruction.

M340 in an N050-th line is an acquisition end instruction, and the CPU 31 ends the acquisition of the machining load Fm started by the acquisition start instruction in the N020-th line. The storage device 29 stores data constituting the waveform of the machining load Fm illustrated in FIG. 8. Although details will be described later, the numerical control device 30 executes monitoring of the acquired machining load Fm. Here, the monitoring of the machining load Fm refers to periodically determining whether a value of the machining load Fm is normal or abnormal in the cutting. A mode of the numerical control device 30 for monitoring the machining load Fm is referred to as a monitoring mode. In other words, the acquisition start instruction is an instruction to start the monitoring mode, and the acquisition end instruction is an instruction to end the monitoring mode.

An N060-th line is a fast feed instruction, and the CPU 31 causes the main spindle to move by fast feed to the Z-axis position of 100 mm. An N070-th line is an end instruction, and the execution of the NC program is ended.

As illustrated in FIG. 8, the CPU 31 causes the waveform of the machining load Fm to be displayed on the display unit 15. Fr illustrated in FIG. 8 is a reference machining load. The reference machining load Fr is the machining load Fm acquired in the trial machining process.

In the main process, the monitoring of the machining load Fm is executed based on the reference machining load Fr. In the main process, it is monitored whether the acquired machining load Fm is between a lower limit load Fl and an upper limit load Fh. The upper limit load Fh is obtained by adding an upper limit machining load A, which is a predetermined offset amount, to the reference machining load Fr. The lower limit load Fl is obtained by subtracting a lower limit machining load B, which is a predetermined offset amount, from the reference machining load Fr.

More specifically, the upper limit load Fh and the lower limit load Fl are derived as follows. The CPU 31 acquires a slope $\alpha$ with reference to the following (Equation 1).

$$\alpha = |Frt - Frt\text{-}1|/\text{sampling time} \qquad (\text{Equation 1}),$$

where Frt-1 is the reference machining load Fr at a time t-1 of the previous sampling. Frt is the reference machining load Fr at a time t of the current sampling.

The CPU 31 corrects the upper limit machining load A based on the slope $\alpha$. Here, the upper limit machining load A is corrected using the following equation (Equation 2).

$$A' = \alpha \times tc, A \text{ is used when } \alpha \times tc > A, \text{ and } A' \text{ is used when } \alpha \times tc \leq A \qquad (\text{Equation 2}),$$

where A' is a corrected upper limit machining load. $\alpha$ is a slope. tc is a variation allowable time. The variation allowable time tc is a parameter determined according to variations in the machine tool 1, a machining target, a tool, and the like.

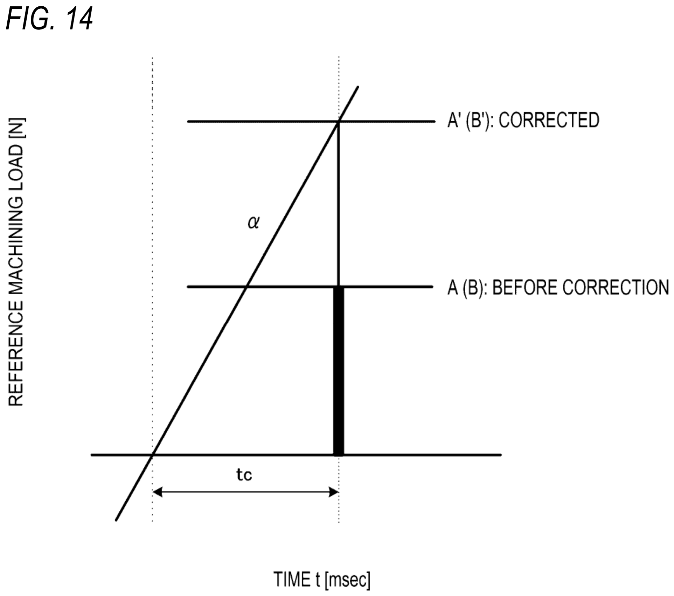

In a case where the slope $\alpha$ is larger than A, the corrected upper limit machining load A' increases proportionally, and in a case where the slope $\alpha$ is equal to or smaller than A, the corrected upper limit machining load A' is the same as A before correction (see FIG. 14).

Similarly to the upper limit machining load A, the CPU 31 corrects the lower limit machining load B. The lower limit machining load B is corrected using the following equation (Equation 3).

$$B' = \alpha \times tc, B \text{ is used when } \alpha \times tc > B, \text{ and } B' \text{ is used when } \alpha \times tc \leq B \qquad (\text{Equation 3}),$$

where B' is a corrected lower limit machining load. $\alpha$ is a slope. tc is a variation allowable time.

The CPU 31 derives the upper limit load Fh by adding the corrected upper limit machining load A' to the reference machining load Fr. The CPU 31 calculates the lower limit load Fl by subtracting the corrected lower limit machining load B' from the reference machining load Fr.

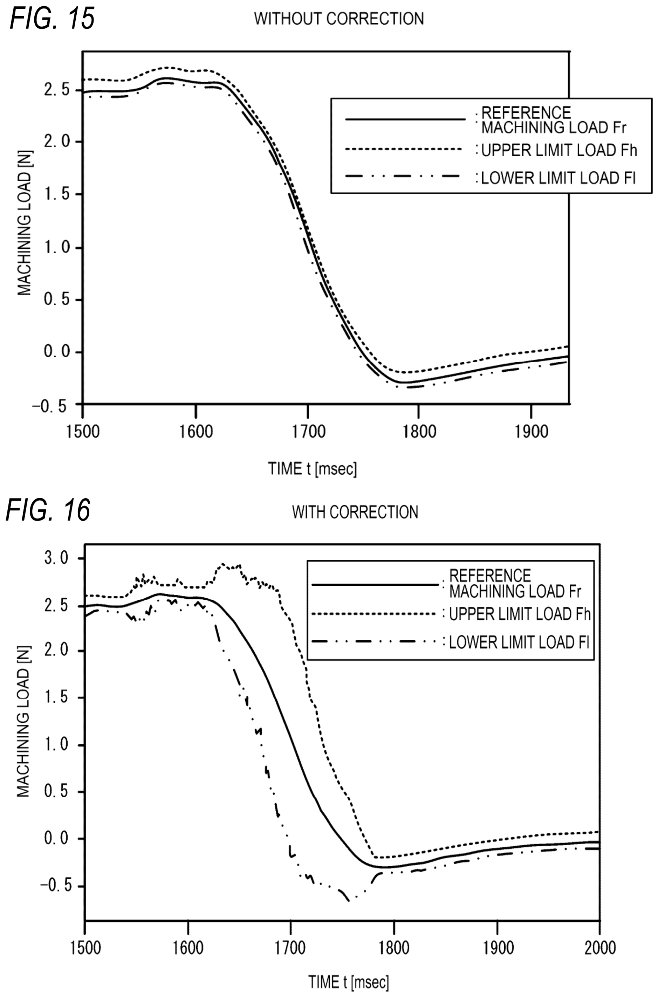

As illustrated in FIG. 15, in a case where the upper limit machining load A and the lower limit machining load B are not corrected, distances between the reference machining load Fr and the upper limit load Fh and the lower limit load Fl are small. Therefore, when the machining load Fm varies in a time axis direction due to the variations in the machine tool 1, the machining target, the tool, and the like, the CPU 31 is likely to erroneously detect an abnormality in the machining load Fm.

On the other hand, as illustrated in FIG. 16, in a case where the upper limit machining load A and the lower limit machining load B are corrected, that is, in a case where the corrected upper limit machining load A' and the corrected lower limit machining load B' are used, a distance between the upper limit load Fh and the lower limit load Fl increases with respect to the reference machining load Fr. Therefore, even when the machining load Fm varies in the time axis direction due to the variations in the machine tool 1, the machining target, the tool, and the like, the CPU 31 is less likely to erroneously detect an abnormality in the machining load Fm. As described above, the correction does not affect a detection capability in a period in which variation in the machining load Fm is small, and is effective in reducing an influence of the variation in a period in which the variation in the machining load Fm is large.

A time constant illustrated in FIG. 8 is used for the LPF process. The operator confirms the waveform of the machining load Fm displayed on the display unit 15, and adjusts the time constant of the LPF by operating the operation unit 24. By executing the LPF process, waveforms of the machining load Fm and the reference machining load Fr are smoothly adjusted. Therefore, by the operator appropriately adjusting the time constant of the LPF, the CPU 31 can reduce the influence of the variation in the machining load Fm on the monitoring.

Returning to the description of the NC program, machining based on the NC program P2 illustrated in FIG. 4 will be described. An N010-th line is a fast feed instruction, and the CPU 31 executes control in the same manner as the control instruction in the N010-th line illustrated in FIG. 3. An N020-th line is an acquisition start instruction, and the CPU 31 starts the acquisition of the machining load Fm in the same manner as the control instruction in the N020-th line illustrated in FIG. 3. An N030-th line is a fast feed instruction, and the CPU 31 causes the main spindle to move by fast feed to an X-axis position of 10 mm, a Y-axis position of 10 mm, and a Z-axis position of 50 mm.

An N040-th line, an N050-th line, and an N060-th line are fixed cycle instructions. G81 in the N040-th line indicates a fixed cycle instruction for executing drilling machining. The fixed cycle instruction is issued in a case where the same machining is performed at a plurality of positions.

The fixed cycle instruction includes a machining instruction. The machining instruction represents a machining condition in a fixed cycle. The machining instructions in the fixed cycle instructions in the N040-th line, the N050-th line, and the N060-th line are indicated by (Z10.R40.F1000) in the N040-th line.

With reference to FIG. 7, control of the main spindle in the fixed cycle instructions in the N040-th line, the N050-th line, and the N060-th line will be described. When the fast feed instruction in the N040-th line is completed, the main spindle is located at the X-axis position of 10 mm, the Y-axis position of 10 mm, and the Z-axis position of 50 mm. In addition, the main spindle rotates at 3,000 rpm.

In the fixed cycle instruction, the CPU 31 first causes the main spindle to move by fast feed to a specified X-axis position and Y-axis position. Next, the CPU 31 causes the main spindle to move by fast feed to the Z-axis position indicated by a number after R. In the fixed cycle instructions in the N040-th line, the N050-th line, and the N060-th line, the CPU 31 causes the main spindle to move by fast feed to a Z-axis position of 40 mm. The movement of the main spindle by fast feed in the fixed cycle instruction is referred to as a positioning movement.

After the positioning movement, the CPU 31 causes the main spindle to move by cutting feed to a Z-axis position indicated by a number after Z. In the fixed cycle instructions in the N040-th line, the N050-th line, and the N060-th line, the CPU 31 causes the main spindle to move by cutting feed to the Z-axis position of 10 mm. After a cutting movement, the CPU 31 causes the main spindle to move by fast feed to the Z-axis position of 50 mm.

Next, as the positioning movement, the CPU 31 causes the main spindle to move by fast feed to an X-axis position and a Y-axis position shown in the N040-th line. That is, the CPU 31 causes the main spindle to move by fast feed to an X-axis position of 20 mm and a Y-axis position of 20 mm. After that, as the positioning movement, the CPU 31 causes the main spindle to move by fast feed to the Z-axis position of 40 mm.

As the cutting movement, the CPU 31 causes the main spindle to move by cutting feed to the Z-axis position of 10 mm. After a cutting movement, the CPU 31 causes the main spindle to move by fast feed to the Z-axis position of 50 mm.

Next, as the positioning movement, the CPU 31 causes the main spindle to move by fast feed to an X-axis position and a Y-axis position shown in the N050-th line. That is, the CPU 31 causes the main spindle to move by fast feed to an X-axis position of 30 mm and a Y-axis position of 30 mm. After that, as the positioning movement, the CPU 31 causes the main spindle to move by fast feed to the Z-axis position of 40 mm.

As the cutting movement, the CPU 31 causes the main spindle to move by cutting feed to the Z-axis position of 10 mm. After a cutting movement, the CPU 31 causes the main spindle to move by fast feed to the Z-axis position of 50 mm. As described above, in the fixed cycle instruction, the cutting movement from the Z-axis position of 40 mm to the Z-axis position of 10 mm is performed at a plurality of different positions of the workpiece.

Returning to the description of the NC program P2 illustrated in FIG. 4, an N070-th line is an acquisition end instruction, and the CPU 31 executes control in the same manner as the control instruction in the N050-th line illustrated in FIG. 3. An N080-th line is a fast feed instruction, and the CPU 31 executes control in the same manner as the control instruction in the N060-th line illustrated in FIG. 3.

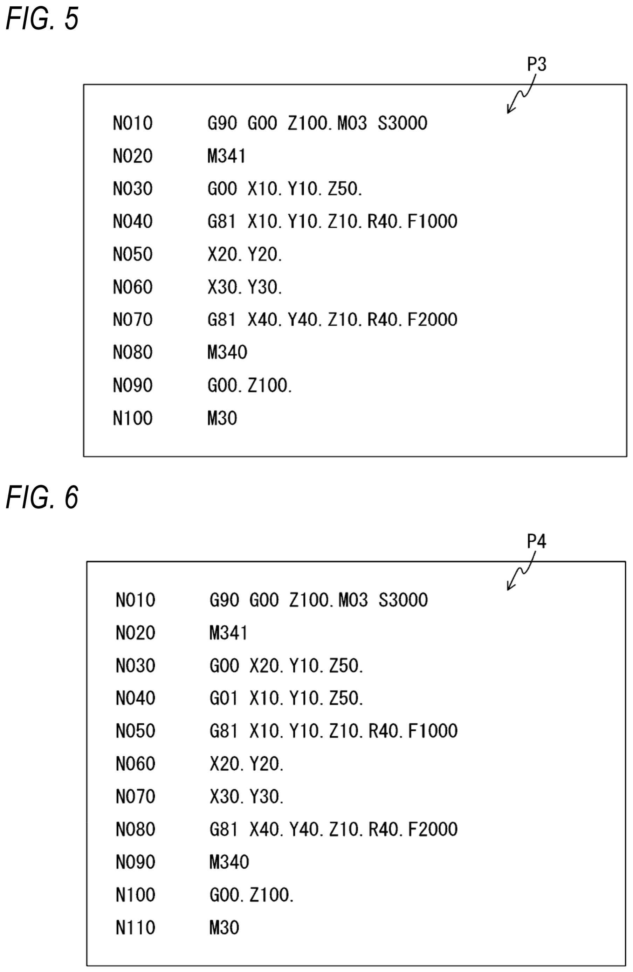

The NC program P3 illustrated in FIG. 5 is different from the NC program P2 in that a fixed cycle instruction is inserted between the control instruction in the N060-th line and the control instruction in the N070-th line illustrated in FIG. 4.

In the NC program P3, machining instructions in an N040-th line, an N050-th line, and an N060-th line are indicated by (R40.F1000) in the N040-th line. A machining instruction in an N070-th line is indicated by (R40.F2000). As described above, the fixed cycle instructions in the N040-th line, the N050-th line, and the N060-th line and the fixed cycle instruction in the N070-th line have different machining instructions.

The NC program P4 illustrated in FIG. 6 is different from the NC program P3 in that a fast feed instruction in N030 and a cutting instruction in N040 are issued instead of the control instruction in the N030-th line illustrated in FIG. 5. In the NC program P4, the cutting instruction is issued before the fixed cycle instruction.

Monitoring of the machining load Fm in the fixed cycle instruction will be described. The monitoring of the machining load Fm in the fixed cycle instruction is executed during the cutting movement in each line. In the N030-th line of the NC program P2, after the positioning movement to the X-axis position of 10 mm, the Y-axis position of 10 mm, and the Z-axis position of 40 mm is completed, the CPU 31 starts the acquisition of the machining load Fm. After a monitoring start time ts has elapsed after the start of the acquisition of the machining load Fm, the CPU 31 starts the monitoring of the machining load Fm. After a monitoring end time te has elapsed after the start of the acquisition of the machining load Fm, the CPU 31 ends the monitoring of the machining load Fm. The monitoring start time ts is a time at which the monitoring of the machining load Fm is started in a period from when the acquisition start instruction is read to when the acquisition end instruction is read. The monitoring end time te is a time at which the monitoring of the machining load Fm is ended in a period from when the acquisition start instruction is read to when the acquisition end instruction is read.

In the N040-th line, after the positioning movement to the X-axis position of 20 mm, the Y-axis position of 20 mm, and the Z-axis position of 40 mm is completed, the CPU 31 ends the acquisition of the machining load Fm once and starts the acquisition of the machining load Fm. After the monitoring start time ts has elapsed after the start of the acquisition of the machining load Fm, the CPU 31 starts the monitoring of the machining load Fm. After a monitoring end time te has elapsed after the start of the acquisition of the machining load Fm, the CPU 31 ends the monitoring of the machining load Fm.

In the N050-th line, after the positioning movement to the X-axis position of 30 mm, the Y-axis position of 30 mm, and the Z-axis position of 40 mm is completed, the CPU 31 ends the acquisition of the machining load Fm once and starts the acquisition of the machining load Fm. After the monitoring start time ts has elapsed after the start of the acquisition of the machining load Fm, the CPU 31 starts the monitoring of the machining load Fm. After a monitoring end time te has elapsed after the start of the acquisition of the machining load Fm, the CPU 31 ends the monitoring of the machining load Fm.

In the fixed cycle instruction, the acquisition of the machining load Fm is started by the cutting movement in each line. Since the monitoring is not continued from the start of the monitoring mode in the N020-th line to the end of the monitoring mode in the N070-th line to be described later, a time from when the monitoring is started to when the monitoring is ended per one operation is short, and a capacity of the reference machining load Fr stored in the storage device 29 can be reduced. In addition, the acquisition start instruction may not be issued before each line of the fixed cycle instruction, and the acquisition end instruction may not be issued after each line of the fixed cycle instruction, and the readability of the NC program does not deteriorate. Since the acquisition of the machining load Fm is started after the positioning movement in each line of the fixed cycle instruction is completed, a timing of the acquisition of the machining load Fm can be aligned between the lines of the fixed cycle instruction.

As shown in the NC program P2 of FIG. 4 and the NC program P3 of FIG. 5, in a case where the fixed cycle instruction is issued after the acquisition start instruction is issued and before the cutting feed instruction is issued, the CPU 31 executes the monitoring of the machining load Fm in the fixed cycle instruction. On the other hand, as shown in the NC program P4 of FIG. 6, in a case where the cutting feed instruction is issued after the acquisition start instruction is issued and before the fixed cycle instruction is issued, the CPU 31 does not execute the monitoring of the machining load Fm in the fixed cycle instruction, but executes the monitoring of the machining load Fm in the cutting feed instruction.

The monitoring mode of the machining load Fm includes a cutting monitoring mode and a multi-hole monitoring mode. The cutting monitoring mode is a mode for executing the monitoring of the machining load Fm in the cutting feed instruction, and the multi-hole monitoring mode is a mode for executing the monitoring of the machining load Fm in the fixed cycle instruction.

As shown in the NC program P3 of FIG. 5, in a case where a different type of fixed cycle instruction or machining instruction is issued after the fixed cycle instruction is issued, the CPU 31 ends the multi-hole monitoring mode and ends the acquisition of the machining load Fm.

The trial machining process will be described with reference to FIG. 9. The operator sets settings of the machine tool 1 to a trial machining operation. The operator attaches the tool 4 to the main spindle and sets a workpiece on a table. The operator operates the operation unit 24 to select and execute the NC program. The CPU 31 reads the trial machining program stored in the ROM 32 and starts the trial machining process. When the trial machining process is started, the CPU 31 executes machining of the workpiece based on the selected NC program (S1).

The CPU 31 acquires the machining load Fm output from the disturbance estimation unit 25 as the reference machining load Fr (S3). A period for acquiring the reference machining load Fr is from when the acquisition start instruction M341 is read to when the acquisition end instruction M340 is read. The reference machining load Fr is acquired at a predetermined sampling time. The sampling time may be set as appropriate. In a case where the NC program includes a fixed cycle instruction, the machining load Fm from when a first block of the fixed cycle instruction is read to when a next block of the fixed cycle instruction is read is acquired as the reference machining load Fr. For example, in the NC program P2 of FIG. 4, the CPU 31 acquires, as the reference machining load Fr, the machining load Fm from when the fixed cycle instruction in the N040-th line is read to when the fixed cycle instruction in the N050-th line is read.

After the acquisition of the reference machining load Fr is completed, the CPU 31 displays a waveform of the acquired reference machining load Fr on the display unit 15 (S5). For example, the operator confirms the waveform of the machining load Fm displayed on the display unit 15 and presses a registration button ("set as reference") illustrated in FIG. 8. As a result, the CPU 31 stores the reference machining load Fr in the storage device 29 (S7). The reference machining load Fr is stored in association with, for example, a NC program number of the NC program, machining conditions (type and tool number of tool 4) of the workpiece, and the like. The reference machining load Fr serves as a reference for the monitoring of the machining load Fm. The NC program number is identification information assigned to identify the NC program.

The operator removes the workpiece and sets a new workpiece on the table. The operator selects and executes the NC program executed in S1 again. When the NC program is executed, the CPU 31 executes machining of the workpiece (S9). The CPU 31 acquires the machining load Fm during the machining of the workpiece from the disturbance estimation unit 25 (S11). As in the case of S3, an acquisition time of the machining load Fm is a period from when M341 is read to when M340 is read.

The CPU 31 displays the acquired machining load Fm on the display unit 15 (S13). As illustrated in FIG. 8, the display unit 15 displays the upper limit load Fh, the lower limit load Fl, and the machining load Fm acquired in S11 in an overlapping manner with respect to the reference machining load Fr.

The CPU 31 sets a time constant of the LPF (S15). The operator confirms the waveform of the machining load Fm on the display unit 15 and adjusts the time constant of the LPF. By performing the LPF process, the waveforms of the machining load Fm and the reference machining load Fr can be smoothly adjusted. Therefore, by appropriately adjusting the time constant of the LPF, the CPU 31 can reduce the influence of the variation in the machining load Fm on the monitoring.

The CPU 31 enables the upper limit machining load A to be set (S27). The upper limit machining load A indicates an offset amount from the waveform of the reference machining load Fr toward an upper side. The CPU 31 enables the lower limit machining load B to be set (S29). The lower limit machining load B indicates an offset amount from the waveform of the reference machining load Fr toward a lower side. The offset amounts of the upper limit machining load A and the lower limit machining load B may be the same or different. For example, the operator sets the upper limit machining load A and the lower limit machining load B by operating the operation unit 24. These setting values are used in a relative monitoring process to be described later. The CPU 31 ends the trial machining process.

The operator executes the above trial machining process for each NC program. The machining conditions and the like of the workpiece are different for each NC program. Therefore, the numerical control device 30 acquires the reference machining load Fr for each machining condition of the NC program and for each tool 4 to be used.

The main process will be described with reference to FIGS. 10 to 13. The operator sets settings of the machine tool 1 to a monitoring operation. The operator operates the operation unit 24 to select and execute the NC program. The CPU 31 reads a monitoring program stored in the ROM 32 and starts the main process.

When the main process is started, the CPU 31 reads one block of the NC program (S33). The CPU 31 determines whether the end instruction is read in the process of S33 (S35). When it is determined that the end instruction is not read (NO in S35), the CPU 31 determines whether the monitoring mode is set (S37).

When it is determined that the monitoring mode is not set (NO in S37), the CPU 31 determines whether the acquisition start instruction M341 is read in the process of S33 (S39). When it is determined that the acquisition start instruction M341 is not read (NO in S39), the CPU 31 executes various processes based on a control instruction of the read block (S53). The CPU 31 returns the process to S33.

When it is determined that the acquisition start instruction M341 is read (YES in S39), the CPU 31 sets the monitoring mode and starts the monitoring of the machining load Fm (S41). In the process of S41, the CPU 31 sets the monitoring mode to an undetermined mode. The undetermined mode is included in the monitoring mode and is a state before the cutting monitoring mode or the multi-hole monitoring mode is set. The CPU 31 returns the process to S33.

When it is determined that the monitoring mode is set (YES in S37), the CPU 31 determines whether the cutting monitoring mode is set (S43). When it is determined that the cutting monitoring mode is not set (NO in S43), the CPU 31 determines whether the multi-hole monitoring mode is set (S45).

When it is determined that the multi-hole monitoring mode is not set (NO in S45), the CPU 31 determines whether the cutting feed instruction is read in the process of S33 (S47). When it is determined that the cutting feed instruction is not read (NO in S47), the CPU 31 determines whether the fixed cycle instruction is read in the process of S33 (S49).

When it is determined that the fixed cycle instruction is not read (NO in S49), the CPU 31 determines whether the acquisition end instruction M340 is read in the process of S33 (S51). When it is determined that the acquisition end instruction M340 is not read (NO in S51), the CPU 31 executes various processes (S53), and returns the process to S33.

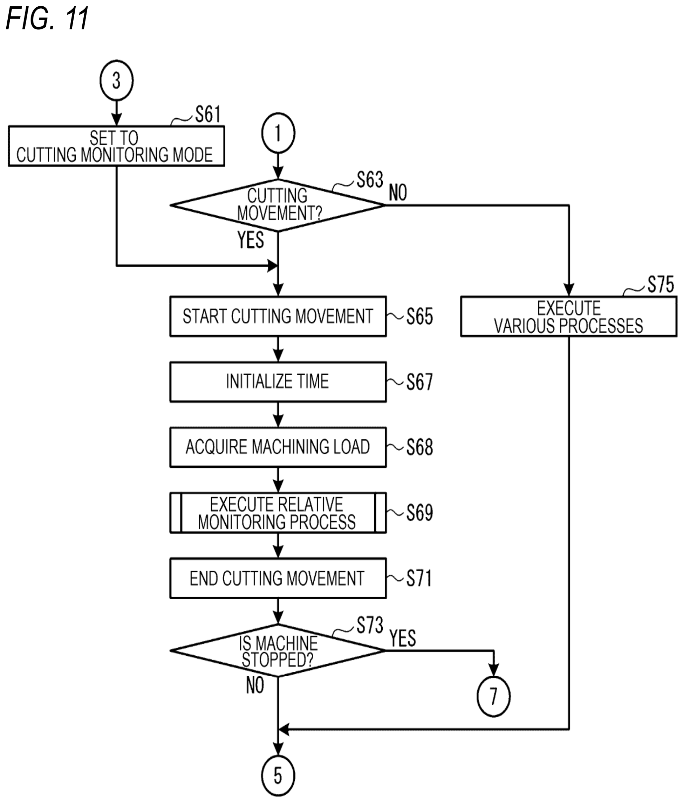

When it is determined that the cutting feed instruction is read (YES in S47), the CPU 31 sets the monitoring mode to the cutting monitoring mode as illustrated in FIG. 11 (S61). The CPU 31 starts cutting feed based on the read cutting feed instruction (S65).

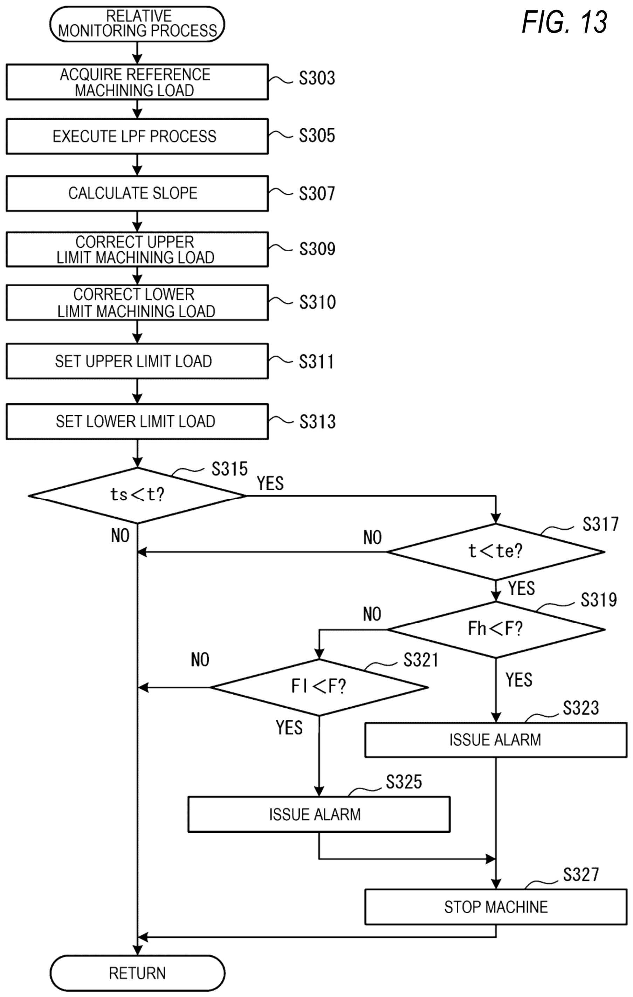

The CPU 31 initializes a time t of the timer 23 to 0 (S67). The CPU 31 executes the acquisition of the machining load Fm from the disturbance estimation unit 25 (S68). The CPU 31 executes the relative monitoring process illustrated in FIG. 13 (S69).

The relative monitoring process executed in the main process will be described with reference to FIG. 13. The CPU 31 acquires the reference machining load Fr from the storage device 29 (S303). In this case, the CPU 31 acquires the reference machining load Fr acquired at the same time as the time t indicated by the timer 23. The CPU 31 executes the LPF process with the time constant set in the trial machining process for the machining load Fm and the reference machining load Fr (S305).

The CPU 31 acquires the slope $\alpha$ with reference to (Equation 1) (S307). The CPU 31 corrects the upper limit machining load A set in the trial machining process based on (Equation 2) and the slope $\alpha$ (S309). The CPU 31 corrects the lower limit machining load B based on (Equation 3) and the slope $\alpha$ (S310).

The CPU 31 sets the upper limit load Fh (S311). In the process of S311, the CPU 31 adds the corrected upper limit machining load A' to the reference machining load Fr. The CPU 31 sets the lower limit load Fl (S313). In the process of S313, the CPU 31 subtracts the corrected lower limit machining load B' from the reference machining load Fr.

The CPU 31 determines whether the time t indicated by the timer 23 has reached the monitoring start time ts (S315). When it is determined that the time t indicated by the timer 23 has not reached the monitoring start time ts (NO in S315), the CPU 31 ends the relative monitoring process and returns the process to the main process.

When it is determined that the time t indicated by the timer 23 has reached the monitoring start time ts (YES in S315), the CPU 31 determines whether the time t has reached the monitoring end time te (S317). When it is determined that the time t indicated by the timer 23 exceeds the monitoring end time te (NO in S317), the CPU 31 ends the relative monitoring process and returns the process to the main process.

On the other hand, when it is determined that the time t indicated by the timer 23 has not reached the monitoring end time te (YES in S317), the CPU 31 determines whether the acquired machining load Fm is larger than the upper limit load Fh (S319).

When it is determined that the machining load Fm is equal to or lower than the upper limit load Fh (NO in S319), the CPU 31 determines whether the machining load Fm is lower than the lower limit load Fl (S321). When it is determined that the machining load Fm is equal to or larger than the lower limit load Fl (NO in S321), the CPU 31 ends the relative monitoring process and returns the process to the main process.

On the other hand, when it is determined that the machining load Fm is larger than the upper limit load Fh (YES in S319), that is, when an abnormality occurs in the machining load Fm, the CPU 31 issues an alarm indicating that the machining load Fm exceeds the upper limit load Fh (S323). As the alarm notification, for example, a character string such as "there is abnormality in machining load" may be displayed on the display unit 15. In addition, the alarm notification may make a warning by a buzzer or the like. The CPU 31 stops driving of the machine tool 1 (S327) and returns the process to the main process.

When it is determined that the machining load Fm is lower than the lower limit load Fl (YES in S321), the CPU 31 issues an alarm indicating that the machining load Fm is lower than the lower limit load Fl (S325). The CPU 31 stops the driving of the machine tool 1 (S327) and returns the process to the main process.

As illustrated in FIG. 11, after executing the relative monitoring process (S69), the CPU 31 ends the cutting feed started in S65 (S71). The CPU 31 determines whether the driving of the machine tool 1 is stopped (S73). When it is determined that the driving of the machine tool 1 is stopped by the process of S327 in FIG. 13 (YES in S73), the CPU 31 ends the main process. When it is determined that the driving of the machine tool 1 is not stopped (NO in S73), the CPU 31 returns the process to S33.

When it is determined that the cutting monitoring mode is set (YES in S43, see FIG. 10), the CPU 31 determines whether the cutting feed instruction is read in the process of S33 (see FIG. 10) as illustrated in FIG. 11 (S63). When it is determined that the cutting feed instruction is not read (NO in S63), the CPU 31 executes various processes based on a control instruction read in the process of S33 (S75), and returns the process to S33. When it is determined that the cutting feed instruction is read (YES in S63), the CPU 31 proceeds the process to S65, executes the cutting feed and the monitoring of the machining load Fm in the processes of S65 to S73, and returns the process to S33.

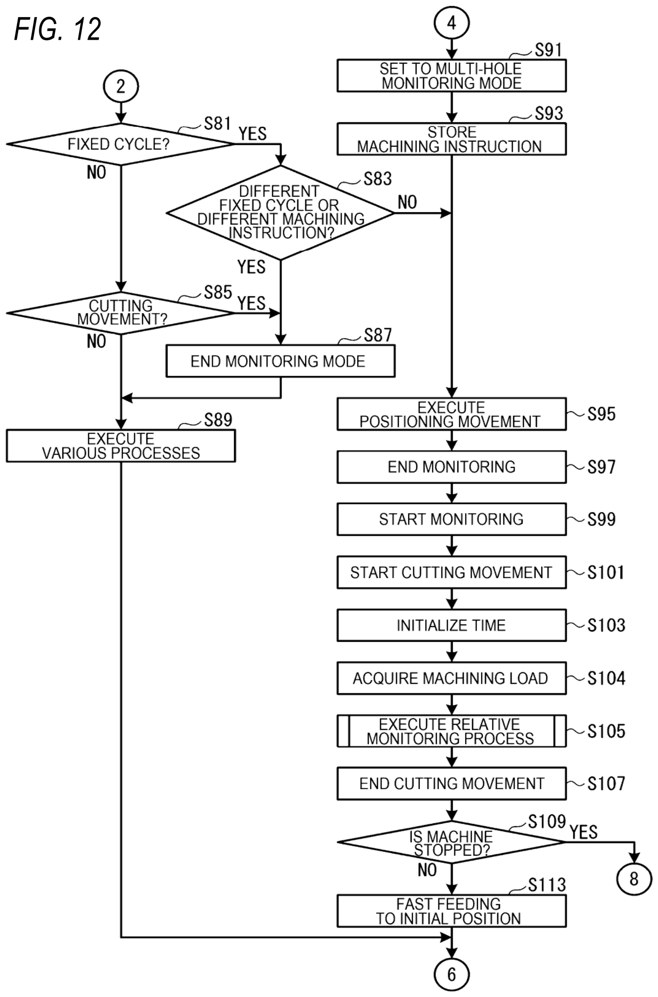

When it is determined that the fixed cycle instruction is read (YES in S49, see FIG. 10), the CPU 31 sets the monitoring mode to the multi-hole monitoring mode as illustrated in FIG. 12 (S91). The CPU 31 stores the machining instruction included in the read fixed cycle instruction in the RAM 33 (S93).

The CPU 31 causes the main spindle to execute the positioning movement to a position indicated by the fixed cycle instruction by fast feed (S95). The CPU 31 temporarily ends the monitoring of the machining load Fm (S97), and starts the monitoring of the machining load Fm (S99).

The CPU 31 starts the cutting movement based on the fixed cycle instruction (S101). The CPU 31 initializes the time t of the timer 23 to 0 (S103). The CPU 31 executes the acquisition of the machining load Fm from the disturbance estimation unit 25 (S104). The CPU 31 executes the relative monitoring process illustrated in FIG. 13 (S105).

After executing the relative monitoring process (S105), the CPU 31 ends the cutting movement started in S101 (S107). The CPU 31 determines whether the driving of the machine tool 1 is stopped (S109).

When it is determined that the driving of the machine tool 1 is stopped by the process of S327 in FIG. 13 (YES in S109), the CPU 31 ends the main process. When it is determined that the driving of the machine tool 1 is not stopped (NO in S109), the CPU 31 causes the main spindle to move by fast feed to an initial Z-axis position (S113). The CPU 31 returns the process to S33.

When it is determined that the multi-hole monitoring mode is set (YES in S45, see FIG. 10), the CPU 31 determines whether the fixed cycle instruction is read in the process of S33 (see FIG. 10) as illustrated in FIG. 12 (S81). When it is determined that the fixed cycle instruction is read (YES in S81), the CPU 31 determines whether the read fixed cycle instruction is a different type of fixed cycle instruction or whether the machining instruction included in the fixed cycle instruction is different from the machining instruction stored in S93 (S83). The fixed cycle instruction includes, in addition to the fixed cycle instruction of the drilling machining indicated by G81 of the NC programs P2 to P4, a fixed cycle instruction of tapping indicated by G84, a fixed cycle instruction of boring indicated by G85, and the like. The machining instruction includes, in addition to Z, R, and F, P for issuing a temporary stop time at a hole bottom, S for issuing a main spindle rotation speed, and the like. An example in which the machining instruction stored in the storage device 29 is different is indicated by the NC program P3 in FIG. 5.

When it is determined that the read fixed cycle instruction is the same type of fixed cycle instruction and the machining instruction included in the fixed cycle instruction is the same as the machining instruction stored in S93 (NO in S83), the CPU 31 proceeds the process to S95. The CPU 31 executes cutting movement based on the fixed cycle instruction and the monitoring of the machining load Fm in the processes of S95 to S113, and returns the process to S33.

When it is determined that the read fixed cycle instruction is a different type of fixed cycle instruction or the machining instruction included in the fixed cycle instruction is different from the machining instruction stored in S93 (YES in S83), the CPU 31 ends the monitoring mode started in S41 of FIG. 10 and ends the acquisition of the machining load Fm (S87). The CPU 31 executes various processes based on the control instruction read in the process of S33 (S89), and returns the process to S33.

When it is determined that the fixed cycle instruction is not read in the process of S33 (NO in S81), the CPU 31 determines whether the cutting feed instruction is read (S85). When it is determined that the cutting feed instruction is read (YES in S85), the CPU 31 ends the monitoring mode (S87), and proceeds the process to S89. When it is determined that the cutting feed instruction is not read (NO in S85), the CPU 31 proceeds the process to S89.

As illustrated in FIG. 10, when it is determined that the acquisition end instruction M340 is read in the process of S33 (YES in S51), the CPU 31 ends the monitoring mode started in S41 (S55), and returns the process to S33. When it is determined that the end instruction is read in the process of S33 (YES in S35), the CPU 31 ends the main process.

As described above, the CPU 31 of the numerical control device 30 reads the acquisition start instruction M341 and the acquisition end instruction M340 in the process of S33. The CPU 31 determines whether the fixed cycle instruction is read in a period from when the acquisition start instruction M341 is read to when the acquisition end instruction M340 is read (S49). When it is determined that the fixed cycle instruction is read (YES in S49), the CPU 31 executes the monitoring of the machining load Fm in units of blocks of the NC program (S105). In the monitoring of the machining load Fm, the CPU 31 acquires the machining load Fm (S104), and executes the monitoring based on the acquired machining load Fm (S319 and S321).

The above numerical control device 30 specifies the acquisition start time and the acquisition end time of the machining load Fm by the acquisition start instruction M341 and the acquisition end instruction M340 of the NC program. Therefore, the numerical control device 30 can monitor the machining load Fm acquired in a desired period. In addition, since the machining load Fm is monitored in each block in the fixed cycle instruction, the time from when the monitoring is started to when the monitoring is ended per one operation is shorter than in the case where the monitoring of the machining load Fm is continued from when the acquisition start instruction is read to when the acquisition end instruction is read, so that the capacity of the reference machining load Fr stored in the storage device 29 can be reduced. Further, it is not necessary to issue the acquisition start instruction before each block of the fixed cycle instruction and the acquisition end instruction after each block of the fixed cycle instruction each time, and the readability of the NC program does not deteriorate.

The storage device 29 of the numerical control device 30 stores the reference machining load Fr by the process of S7. In the monitoring of the machining load Fm in the fixed cycle instruction, the CPU 31 monitors the machining load Fm by the upper limit load Fh and the lower limit load Fl based on the reference machining load Fr (S319 and S321). The numerical control device 30 monitors the machining load Fm based on the same reference machining load Fr in each block of the fixed cycle instruction. Therefore, the numerical control device 30 can prevent a capacity shortage of the storage device 29 as compared with the case where the storage device 29 stores the reference machining load Fr for each block in the fixed cycle instruction.

In the numerical control device 30, the CPU 31 acquires the machining load Fm (S104) after the positioning movement in the fixed cycle instruction (S95) is completed. As a result, the numerical control device 30 can align the timing of starting the acquisition of the machining load Fm among respective blocks of the fixed cycle instruction. Therefore, the numerical control device 30 can correctly monitor the machining load Fm for each block of the fixed cycle instruction.

In the numerical control device 30, the CPU 31 determines whether the cutting feed instruction is issued before the fixed cycle instruction is issued in the period from when the acquisition start instruction M341 is read to when the acquisition end instruction M340 is read (S47). When the cutting feed instruction is issued before the fixed cycle instruction is issued, the CPU 31 acquires the machining load Fm during the cutting feed (S68), and executes the monitoring of the machining load Fm based on the acquired machining load Fm (S69). When the cutting feed instruction is issued before the fixed cycle instruction, the numerical control device 30 can monitor the machining load Fm for the cutting feed.

In the numerical control device 30, the fixed cycle instruction includes a machining instruction for determining a machining condition. The CPU 31 determines whether the read fixed cycle instruction is a different type of fixed cycle instruction or whether the machining instruction included in the fixed cycle instruction is different from the machining instruction stored in S93 (S83). When it is determined that the read fixed cycle instruction is a different type of fixed cycle instruction or the machining instruction included in the fixed cycle instruction is different from the machining instruction stored in S93 (YES in S83), the CPU 31 ends the monitoring mode and ends the acquisition of the machining load Fm (S87). Therefore, the numerical control device 30 can prevent the monitoring based on the machining load in machining by a different type of fixed cycle instruction or a fixed cycle instruction including a different machining instruction.

In the numerical control device 30, the CPU 31 acquires the machining load Fm as the reference machining load Fr (S3). When the NC program includes the fixed cycle instruction, the CPU 31 acquires, as the reference machining load Fr, the machining load Fm from when the first block of the fixed cycle instruction is read to when the next block of the fixed cycle instruction is read. Therefore, the numerical control device 30 can monitor the machining load Fm based on the reference machining load Fr.

In the numerical control device 30, the CPU 31 sets, based on the stored reference machining load Fr, the monitoring start time ts at which the monitoring of the machining load Fm is started in a period from when the first block of the fixed cycle instruction is read to when the next block of the fixed cycle instruction is read (S17). The CPU 31 sets, based on the stored reference machining load Fr, the monitoring end time te at which the monitoring of the machining load Fm is ended in the period from when the first block of the fixed cycle instruction is read to when the next block of the fixed cycle instruction is read (S19). The CPU 31 monitors the acquired machining load Fm during the period from the set monitoring start time ts to the set monitoring end time te. The numerical control device 30 can execute the monitoring of, among the acquired machining loads Fm, a machining load Fm for a period required for the monitoring from the monitoring start time ts to the monitoring end time te.

In the numerical control device 30, the CPU 31 sets the upper limit load Fh based on the stored reference machining load Fr (S27). The CPU 31 sets the lower limit load Fl based on the stored reference machining load Fr (S29). The CPU 31 monitors the machining load Fm based on the set upper limit load Fh and the set lower limit load Fl. The numerical control device 30 can monitor the machining load Fm based on the upper limit load Fh and lower limit load Fl based on the reference machining load Fr. The numerical control device 30 can appropriately execute the monitoring even when the reference machining load Fr varies greatly, for example.

In the numerical control device 30, when it is determined that the acquired machining load Fm is larger than the set upper limit load Fh, the CPU 31 notifies an abnormality of the machining load Fm (S323). When it is determined that the acquired machining load Fm is lower than the set lower limit load Fl, the CPU 31 notifies the abnormality of the machining load Fm (S325). An operator of the numerical control device 30 can recognize the abnormality of the machining load Fm.

In the numerical control device 30, the CPU 31 displays the stored reference machining load Fr, the set upper limit load Fh, the set lower limit load Fl, and the acquired machining load Fm on the display unit 15 in an overlapping manner (S5 and S13). In the numerical control device 30, the operator can visually confirm the machining load Fm.

In the numerical control device 30, the upper limit load Fh is obtained by adding the upper limit machining load A, which is a predetermined offset amount, to the reference machining load Fr. The lower limit load Fl is obtained by subtracting the lower limit machining load B, which is a predetermined offset amount, from the reference machining load Fr. The CPU 31 corrects the set upper limit machining load A based on a change amount of the reference machining load Fr with respect to a sampling time of the reference machining load Fr (S309). The CPU 31 corrects the set lower limit machining load B based on the change amount (S310). The numerical control device 30 can appropriately correct the upper limit machining load A and the lower limit machining load B based on a magnitude of the change amount of the reference machining load Fr.

In the numerical control device 30, the CPU 31 acquires the reference machining load Fr for each tool 4 used in the machining of the workpiece based on the NC program. The CPU 31 stores the reference machining load Fr acquired for each tool 4 in association with each corresponding tool 4. The CPU 31 acquires the machining load Fm in a case where the workpiece is machined with any of the tools 4. The CPU 31 monitors the acquired machining load Fm based on the reference machining load Fr associated with the tool 4 currently attached to the main spindle among the reference machining loads Fr stored in association with each tool 4. The numerical control device 30 can monitor the machining load Fm based on the reference machining load Fr associated with each tool 4.

In the above description, the CPU 31 is an example of the controller of the present invention. The acquisition start instruction M341 is an example of a first command of the present invention. The acquisition end instruction M340 is an example of a second command of the present invention. S33 is an example of a reading process and a reading step of the present invention. The N040-th line, the N050-th line, and the N060-th line of the NC program P2, the N040-th line, the N050-th line, and the N060-th line of the NC program P3, and the N050-th line, the N060-th line, the N070-th line, and the N080-th line of the NC program P4 are examples of the fixed cycle command of the present invention. S49 and S81 are examples of a first determination process and a first determination step of the present invention. The process started from S99 is an example of a cycle monitoring process and a cycle monitoring step of the present invention. S104 is an example of a first load acquisition process and a first load acquisition step of the present invention. S105 is an example of a first monitoring process and a first monitoring step of the present invention. S47 is an example of a second determination process of the present invention. S68 is an example of a second load acquisition process of the present invention. S69 is an example of a second monitoring process of the present invention. The machining instruction is an example of a machining command of the present invention. S83 is an example of a third determination process of the present invention. The N040-th line of the NC program P2, the N040-th line of the NC program P3, and the N050-th line of the NC program P4 are examples of a first cycle command of the present invention. The N050-th line of the NC program P2, the N050-th line of the NC program P3, and the N060-th line of the NC program P4 are examples of a second cycle command of the present invention. S3 is an example of a third load acquisition process of the present invention. S17 is an example of a first setting process of the present invention. S19 is an example of a second setting process of the present invention. S27 is an example of a third setting process of the present invention. S29 is an example of a fourth setting process of the present invention. S323 is an example of a first notification control process of the present invention. S325 is an example of a second notification control process of the present invention. S5 and S13 are examples of a display control process of the present invention. S309 is an example of a first correction process of the present invention. S310 is an example of a second correction process of the present invention.

The present invention is not limited to the above embodiment. Although the machine tool 1 of the above embodiment is a vertical machine tool whose main spindle extends in the Z-axis direction, the present invention is also applicable to a horizontal machine tool whose main spindle extends in a horizontal direction. The machine tool 1 may be of a table traverse type in which the table moves on an XY plane or a column traverse type in which the main spindle moves on the XY plane.

In the above embodiment, in a case where the NC program includes the fixed cycle instruction, the CPU 31 acquires, as the reference machining load Fr, the machining load Fm from when the first block of the fixed cycle instruction is read to when the next block of the fixed cycle instruction is read. On the other hand, the machining load Fm from when an N-th (N > 1) block of the fixed cycle instruction is read to when an (N+1)-th block of the fixed cycle instruction is read may be set as the reference machining load Fr. The reference machining load Fr is not limited to the machining load Fm acquired in the trial machining process, and may be a predetermined value stored in advance in the storage device 29 or a value input from the operation unit 24. The magnitude of the reference machining load Fr may be different in each block of the fixed cycle instruction.

In the above embodiment, the acquisition of the machining load Fm is started after the positioning movement in the fixed cycle instruction is completed. On the other hand, the acquisition of the machining load Fm may be started at the start of the positioning movement.

In the above embodiment, when the cutting feed instruction is read before the fixed cycle instruction is read, the monitoring of the machining load Fm in the cutting feed instruction is executed instead of the monitoring the machining load Fm in the fixed cycle instruction, but the monitoring of the machining load Fm in the fixed cycle instruction may be executed.

The acquisition of the machining load Fm may not be ended when a fixed cycle instruction of a type different from the fixed cycle instruction is issued. The acquisition of the machining load Fm may not be ended when a fixed cycle instruction including a different machining instruction is issued.

In the above embodiment, the acquisition start instruction M341 and the acquisition end instruction M340 of the machining program are read at the time of cutting feed, but the present invention is not limited thereto. The M341 and the M340 may be appropriately input by the operator from the operation unit 24.

In the above embodiment, the monitoring start time ts is set to 1,000 msec, and the monitoring end time te is set to 2,000 msec or 3,000 msec. For example, the monitoring start time ts may be combined with a time t0, that is, a machining load acquisition start time. The monitoring start time ts may be appropriately set according to the reference machining load Fr. The same applies to the monitoring end time te.

In the above embodiment, the reference machining load Fr is acquired once, but the present invention is not limited thereto. The reference machining load Fr may be updated according to a situation.

In the above embodiment, the upper limit machining load A and the lower limit machining load B are corrected using the slope $\alpha$, but the upper limit machining load A and the lower limit machining load B may not be corrected. In order to exclude a portion where the slope $\alpha$ is steep, the monitoring start time ts and the monitoring end time te may be appropriately set.

In the above embodiment, the upper limit load Fh and the lower limit load Fl are compared, but the present invention is not limited thereto. For example, the monitoring may be executed using only one of the upper limit load Fh and the lower limit load Fl. For example, the CPU 31 may only set the upper limit load Fh based on the stored reference machining load Fr. When it is determined that the acquired machining load Fm is larger than the set upper limit load Fh, the CPU 31 notifies the abnormality of the machining load Fm. On the other hand, the CPU 31 may only set the lower limit load Fl based on the stored reference machining load Fr. When it is determined that the acquired machining load Fm is lower than the set lower limit load Fl, the CPU 31 notifies the abnormality of the machining load Fm. Even in this case, the operator of the numerical control device 30 can recognize the abnormality of the machining load Fm. In addition, the monitoring of the machining load Fm may be executed based on a deviation between the reference machining load Fr and the machining load Fm. For example, as a comparison value, the change amount of the reference machining load Fr per sampling time may be compared with a change amount of the machining load Fm.

In the above embodiment, the upper limit load Fh is calculated by adding the upper limit machining load A, which is a predetermined offset amount, to the reference machining load Fr, and the lower limit load Fl is calculated by subtracting the lower limit machining load B, which is a predetermined offset amount, from the reference machining load Fr. For example, the upper limit load Fh may be calculated by subtracting, multiplying, or dividing a predetermined coefficient Ar from the reference machining load Fr. The upper limit load Fh may be a predetermined value. The lower limit load Fl may be calculated by adding, multiplying, or dividing a predetermined coefficient Br to the reference machining load Fr. The lower limit load Fl may be a predetermined value.

In the above embodiment, the reference machining load Fr, the upper limit load Fh, the lower limit load Fl, and the machining load Fm are displayed in an overlapping manner, but the present invention is not limited thereto. For example, at least one of the reference machining load Fr, the upper limit load Fh, the lower limit load Fl, and the machining load Fm may

**EP 4 752 654 A1**

be displayed. The displayed waveform may be appropriately set by the operator.

In the above embodiment, the reference machining load Fr is stored in the storage device 29 without executing the LPF process, but the present invention is not limited thereto. The reference machining load Fr may be stored after the LPF process is executed. In this case, the machining load Fm to be acquired may be monitored by executing the LPF process with the same time constant. The reference machining load Fr is not limited to being stored in the storage device 29. The reference machining load Fr may be stored in a storage device of an external device connected via the interfaces 34 and 35. The CPU 31 may receive the reference machining load Fr from the external device and store the reference machining load Fr in the storage device 29. In addition, the reference machining load Fr may be stored in a known storage medium connectable to the interfaces 34 and 35. The CPU 31 may receive the reference machining load Fr from the storage medium and store the reference machining load Fr in the storage device 29.

In the above embodiment, the CPU 31 monitors the machining load Fm each time the fixed cycle instruction is read in the multi-hole monitoring mode, but the present invention is not limited thereto. For example, when the number of times the fixed cycle instruction is read is a multiple of 2, the CPU 31 may monitor the machining load Fm of the cutting based on the read fixed cycle instruction. In the cutting monitoring mode, the CPU 31 executes the monitoring of the machining load Fm each time the cutting feed instruction is read, but the present invention is not limited thereto. For example, when the number of times the fixed cycle instruction is read is a multiple of 3, the CPU 31 may monitor the machining load Fm of the cutting based on the read fixed cycle instruction. An interval of the monitoring of the machining load Fm may be changed as appropriate.

**Reference Signs List**

1: machine tool;
15: display unit;
29: storage device;
30: numerical control device;
31: CPU;
M341: acquisition start instruction;
M340: acquisition end instruction;
Fm: machining load;
Fr: reference machining load
A, A': upper limit machining load
B, B': lower limit machining load;
Fh: upper limit load;
Fl: lower limit load;
α: slope

**Claims**

1. A numerical control device comprising a controller configured to control a machine tool that machines a workpiece with a tool based on an NC program, wherein

the controller is configured to execute
a reading process of reading, from among commands of the NC program, a first command indicating an acquisition start time for starting acquisition of a machining load in machining of the workpiece and a second command indicating an acquisition end time for ending the acquisition of the machining load,
a first determination process of determining whether a fixed cycle command for executing the same machining at a plurality of different positions of the workpiece is present in a period from when the first command is read in the reading process to when the second command is read in the reading process, and
a cycle monitoring process of executing monitoring for each of the same machining in the fixed cycle command in a case where it is determined in the first determination process that the fixed cycle command is present,
the cycle monitoring process includes
a first load acquisition process of acquiring the machining load, and
a first monitoring process of executing monitoring based on the machining load acquired in the first load acquisition process.

16

2. The numerical control device according to claim 1, wherein
in the first monitoring process, the machining load acquired in the first load acquisition process is monitored in the same machining in the fixed cycle command based on a reference machining load stored in a storage device and serving as a reference of the monitoring for the same machining in the fixed cycle command.

3. The numerical control device according to claim 1, wherein
in the first load acquisition process, the acquisition of the machining load is started after completion of positioning movement of one or both of the tool and the workpiece, the positioning movement being performed prior to first cutting movement in the fixed cycle command.

4. The numerical control device according to claim 1, wherein

the controller is configured to
execute a second determination process of determining whether a cutting feed command for executing cutting feed is issued before the fixed cycle command in a period from when the first command is read in the reading process to when the second command is read in the reading process, and
in a case where it is determined in the second determination process that the cutting feed command is issued before the fixed cycle command, instead of executing the monitoring by the cycle monitoring process, execute

a second load acquisition process of acquiring the machining load during the cutting feed, and
a second monitoring process of executing monitoring based on the machining load acquired in the second load acquisition process.

5. The numerical control device according to claim 1, wherein

the fixed cycle command includes a machining command for determining a machining condition,
the numerical control device further includes a third determination process of determining whether the fixed cycle command or the machining command of a type different from the same machining in the fixed cycle command is issued after the fixed cycle command in a period from when the first command is read in the reading process to when the second command is read in the reading process, and
the first load acquisition process ends the acquisition of the machining load in a case where it is determined in the third determination process that the fixed cycle command or the machining command of a type different from the same machining is issued after the fixed cycle command.

6. The numerical control device according to claim 2, wherein

the fixed cycle command includes a first cycle command and a second cycle command different from the first cycle command, and
the controller is configured to execute

a third load acquisition process of acquiring the reference machining load from when the first cycle command is read to when the second cycle command is read in a period from when the first command is read in the reading process to when the second command is read in the reading process, and
a storage control process of storing the reference machining load acquired by the third load acquisition process in the storage device.

7. The numerical control device according to claim 6, wherein

the controller is configured to execute

a first setting process of setting a monitoring start time for starting monitoring of the machining load by the first monitoring process in a period from when the first cycle command is read to when the second cycle command is read based on the reference machining load stored in the storage control process, and
a second setting process of setting a monitoring end time for ending the monitoring of the machining load by the first monitoring process in a period from when the first cycle command is read to when the second cycle command is read based on the reference machining load stored in the storage control process, and

in the first monitoring process, the machining load acquired in the first load acquisition process is monitored in a period from the monitoring start time set in the first setting process to the monitoring end time set in the second setting process.

8. The numerical control device according to claim 6, wherein

the controller is configured to execute

a third setting process of setting an upper limit load based on the reference machining load stored in the storage control process, and
a fourth setting process of setting a lower limit load based on the reference machining load stored in the storage control process, and

in the first monitoring process, the machining load acquired in the first load acquisition process is monitored based on the upper limit load set in the third setting process and the lower limit load set in the fourth setting process.

9. The numerical control device according to claim 8, wherein
the first monitoring process includes

a first notification control process of notifying an abnormality of the machining load in a case where it is determined that the machining load acquired in the first load acquisition process is larger than the upper limit load set in the third setting process, and
a second notification control process of notifying an abnormality of the machining load in a case where it is determined that the machining load acquired in the first load acquisition process is lower than the lower limit load set in the fourth setting process.

10. The numerical control device according to claim 6, wherein

the controller is configured to execute a third setting process of setting an upper limit load based on the reference machining load stored in the storage control process, and
the first monitoring process includes a first notification control process of notifying an abnormality of the machining load in a case where it is determined that the machining load acquired in the first load acquisition process is larger than the upper limit load set in the third setting process.

11. The numerical control device according to claim 6, wherein

the controller is configured to execute a fourth setting process of setting a lower limit load based on the reference machining load stored in the storage control process, and
the first monitoring process includes a second notification control process of notifying an abnormality of the machining load in a case where it is determined that the machining load acquired in the first load acquisition process is lower than the lower limit load set in the fourth setting process.

12. The numerical control device according to claim 8, wherein
the controller is configured to execute a display control process of displaying the reference machining load stored in the storage control process, the upper limit load set in the third setting process, the lower limit load set in the fourth setting process, and the machining load acquired in the first load acquisition process on a display unit in an overlapping manner.

13. The numerical control device according to claim 8, wherein

the upper limit load is calculated based on the reference machining load and an upper limit machining load which is a predetermined offset amount,
the lower limit load is calculated based on the reference machining load and a lower limit machining load which is a predetermined offset amount,
the controller is configured to execute

a first correction process of correcting the upper limit machining load based on a change amount of the reference machining load with respect to a sampling time of the reference machining load, and
a second correction process of correcting the lower limit machining load set in the fourth setting process

18

based on the change amount,

in the third setting process, a value calculated based on the reference machining load and the corrected upper limit machining load is set as the upper limit load, and

in the fourth setting process, a value calculated based on the reference machining load and the corrected lower limit machining load is set as the lower limit load.

14. The numerical control device according to claim 6, wherein

in the third load acquisition process, the reference machining load is acquired for each tool used in the machining of the workpiece based on the NC program,

in the storage control process, the reference machining load acquired for each tool in the third load acquisition process is stored in association with each corresponding tool,

in the first load acquisition process, the machining load in a case where the workpiece is machined with any specific tool among the tools is acquired, and

in the first monitoring process, the machining load acquired in the first load acquisition process is monitored based on the reference machining load associated with the specific tool among the reference machining loads stored in the storage control process in association with each tool.

15. A machine tool comprising a controller configured to machine a workpiece with a tool based on an NC program, wherein

the controller is configured to execute

a reading process of reading, from among commands of the NC program, a first command indicating an acquisition start time for starting acquisition of a machining load in machining of the workpiece and a second command indicating an acquisition end time for ending the acquisition of the machining load,

a first determination process of determining whether a fixed cycle command for executing the same machining at a plurality of different positions of the workpiece is present in a period from when the first command is read in the reading process to when the second command is read in the reading process, and

a cycle monitoring process of executing monitoring for each of the same machining in the fixed cycle command in a case where it is determined in the first determination process that the fixed cycle command is present,

the cycle monitoring process includes

a first load acquisition process of acquiring the machining load, and

a first monitoring process of executing monitoring based on the machining load acquired in the first load acquisition process.

16. A control method for a numerical control device for controlling a machine tool that machines a workpiece with a tool based on an NC program, comprising executing

a reading step of reading, from among commands of the NC program, a first command indicating an acquisition start time for starting acquisition of a machining load in machining of the workpiece and a second command indicating an acquisition end time for ending the acquisition of the machining load,

a first determination step of determining whether a fixed cycle command for executing the same machining at a plurality of different positions of the workpiece is present in a period from when the first command is read in the reading step to when the second command is read in the reading step, and

a cycle monitoring step of executing monitoring for each of the same machining in the fixed cycle command in a case where it is determined in the first determination step that the fixed cycle command is present, wherein the cycle monitoring step includes

a first load acquisition step of acquiring the machining load, and

a first monitoring step of executing monitoring based on the machining load acquired in the first load acquisition step.

17. A program for causing a computer, in a numerical control device for controlling a machine tool that machines a workpiece with a tool based on an NC program, to execute

a reading step of reading, from among commands of the NC program, a first command indicating an acquisition start time for starting acquisition of a machining load in machining of the workpiece and a second command indicating an acquisition end time for ending the acquisition of the machining load,

a first determination step of determining whether a fixed cycle command for executing the same machining at a plurality of different positions of the workpiece is present in a period from when the first command is read in the reading step to when the second command is read in the reading step, and

a cycle monitoring step of executing monitoring for each of the same machining in the fixed cycle command in a case where it is determined in the first determination step that the fixed cycle command is present, wherein the cycle monitoring step includes

a first load acquisition step of acquiring the machining load, and

a first monitoring step of executing monitoring based on the machining load acquired in the first load acquisition step.

18. A storage medium for storing a program for causing a computer, in a numerical control device for controlling a machine tool that machines a workpiece with a tool based on an NC program, to execute

a reading step of reading, from among commands of the NC program, a first command indicating an acquisition start time for starting acquisition of a machining load in machining of the workpiece and a second command indicating an acquisition end time for ending the acquisition of the machining load,

a first determination step of determining whether a fixed cycle command for executing the same machining at a plurality of different positions of the workpiece is present in a period from when the first command is read in the reading step to when the second command is read in the reading step, and

a cycle monitoring step of executing monitoring for each of the same machining in the fixed cycle command in a case where it is determined in the first determination step that the fixed cycle command is present, the cycle monitoring step includes

a first load acquisition step of acquiring the machining load, and

a first monitoring step of executing monitoring based on the machining load acquired in the first load acquisition step.

FIG. 1

UPPER

LEFT ← → RIGHT

LOWER

FIG. 2

EP 4 752 654 A1

*FIG. 3*

P1

| N010 | G90  G00  Z100. M03  S3000 |
|------|---------------------------|
| N020 | M341 |
| N030 | G01  Z10. F1000 |
| N040 | G01  Z15. F200 |
| N050 | M340 |
| N060 | G00. Z100. |
| N070 | M30 |

START ACQUISITION OF MACHINING LOAD

END ACQUISITION OF MACHINING LOAD

*FIG. 4*

P2

| N010 | G90  G00  Z100. M03  S3000 |
|------|---------------------------|
| N020 | M341 |
| N030 | G00  X10. Y10. Z50. |
| N040 | G81  X10. Y10. Z10. R40. F1000 |
| N050 | X20. Y20. |
| N060 | X30. Y30. |
| N070 | M340 |
| N080 | G00. Z100. |
| N090 | M30 |

## FIG. 5

P3

```
N010      G90 G00 Z100. M03 S3000
N020      M341
N030      G00 X10. Y10. Z50.
N040      G81 X10. Y10. Z10. R40. F1000
N050      X20. Y20.
N060      X30. Y30.
N070      G81 X40. Y40. Z10. R40. F2000
N080      M340
N090      G00. Z100.
N100      M30
```

## FIG. 6

P4

```
N010      G90 G00 Z100. M03 S3000
N020      M341
N030      G00 X20. Y10. Z50.
N040      G01 X10. Y10. Z50.
N050      G81 X10. Y10. Z10. R40. F1000
N060      X20. Y20.
N070      X30. Y30.
N080      G81 X40. Y40. Z10. R40. F2000
N090      M340
N100      G00. Z100.
N110      M30
```

*FIG. 7*

## FIG. 8

*FIG. 9*

```
          ┌─────────────────────────────┐
          │  TRIAL MACHINING PROCESS    │
          └─────────────────────────────┘
                         │
          ┌─────────────────────────────┐
          │     EXECUTE MACHINING       │ ～ S1
          │       OF WORKPIECE          │
          └─────────────────────────────┘
                         │
          ┌─────────────────────────────┐
          │     ACQUIRE REFERENCE       │ ～ S3
          │      MACHINING LOAD         │
          └─────────────────────────────┘
                         │
          ┌─────────────────────────────┐
          │     DISPLAY REFERENCE       │ ～ S5
          │      MACHINING LOAD         │
          └─────────────────────────────┘
                         │
          ┌─────────────────────────────┐
          │      STORE REFERENCE        │ ～ S7
          │      MACHINING LOAD         │
          └─────────────────────────────┘
                         │
          ┌─────────────────────────────┐
          │     EXECUTE MACHINING       │ ～ S9
          │       OF WORKPIECE          │
          └─────────────────────────────┘
                         │
          ┌─────────────────────────────┐
          │   ACQUIRE MACHINING LOAD    │ ～ S11
          └─────────────────────────────┘
                         │
          ┌─────────────────────────────┐
          │   DISPLAY MACHINING LOAD    │ ～ S13
          └─────────────────────────────┘
                         │
          ┌─────────────────────────────┐
          │      SET TIME CONSTANT      │ ～ S15
          └─────────────────────────────┘
                         │
          ┌─────────────────────────────┐
          │      SET UPPER LIMIT        │ ～ S27
          │      MACHINING LOAD         │
          └─────────────────────────────┘
                         │
          ┌─────────────────────────────┐
          │      SET LOWER LIMIT        │ ～ S29
          │      MACHINING LOAD         │
          └─────────────────────────────┘
                         │
          ┌─────────────────────────────┐
          │            END              │
          └─────────────────────────────┘
```

FIG. 10

## FIG. 11

③

S61
SET TO
CUTTING MONITORING MODE

①

CUTTING
MOVEMENT? S63 NO

YES

START CUTTING MOVEMENT ~S65

INITIALIZE TIME ~S67

ACQUIRE MACHINING LOAD ~S68

EXECUTE RELATIVE
MONITORING PROCESS ~S69

END CUTTING MOVEMENT ~S71

IS MACHINE
STOPPED? S73 YES

NO

⑦

EXECUTE
VARIOUS PROCESSES S75

⑤

## FIG. 12

Flowchart:

(2) → S81 FIXED CYCLE?
- YES → S83 DIFFERENT FIXED CYCLE OR DIFFERENT MACHINING INSTRUCTION?
  - YES → S87 END MONITORING MODE
  - NO → S95
- NO → S85 CUTTING MOVEMENT?
  - YES → S87 END MONITORING MODE
  - NO → S89 EXECUTE VARIOUS PROCESSES

(4) → S91 SET TO MULTI-HOLE MONITORING MODE → S93 STORE MACHINING INSTRUCTION → S95 EXECUTE POSITIONING MOVEMENT → S97 END MONITORING → S99 START MONITORING → S101 START CUTTING MOVEMENT → S103 INITIALIZE TIME → S104 ACQUIRE MACHINING LOAD → S105 EXECUTE RELATIVE MONITORING PROCESS → S107 END CUTTING MOVEMENT → S109 IS MACHINE STOPPED?
- YES → (8)
- NO → S113 FAST FEEDING TO INITIAL POSITION → (6)

FIG. 13

```
        ( RELATIVE
     MONITORING PROCESS )
              │
              ▼
  ┌─────────────────────┐
  │  ACQUIRE REFERENCE  │ ～ S303
  │   MACHINING LOAD    │
  └─────────────────────┘
              │
              ▼
  ┌─────────────────────┐
  │  EXECUTE LPF PROCESS│ ～ S305
  └─────────────────────┘
              │
              ▼
  ┌─────────────────────┐
  │   CALCULATE SLOPE   │ ～ S307
  └─────────────────────┘
              │
              ▼
  ┌─────────────────────┐
  │   CORRECT UPPER     │ ～ S309
  │ LIMIT MACHINING LOAD│
  └─────────────────────┘
              │
              ▼
  ┌─────────────────────┐
  │   CORRECT LOWER     │ ～ S310
  │ LIMIT MACHINING LOAD│
  └─────────────────────┘
              │
              ▼
  ┌─────────────────────┐
  │  SET UPPER LIMIT LOAD│ ～ S311
  └─────────────────────┘
              │
              ▼
  ┌─────────────────────┐
  │  SET LOWER LIMIT LOAD│ ～ S313
  └─────────────────────┘
              │
              ▼
         ╱ S315 ╲
       ╱ $ts < t$? ╲ ── YES ──────────────────────────┐
        ╲        ╱                                      │
          ╲    ╱                                        ▼
           NO                                      ╱ S317 ╲
            │              ┌──── NO ──────────── ╱ $t < te$? ╲
            │              │                      ╲        ╱
            │              │                        ╲    ╱
            │              │                         YES
            │              │                          │
            │              │                          ▼
            │              │                    ╱ S319 ╲
            │         ┌─ NO ─────────────────╱ $Fh < F$? ╲
            │         │                       ╲        ╱
            │         ▼                         ╲    ╱
            │      ╱ S321 ╲                       YES
            │ ┌─NO╱ $Fl < F$? ╲                    │
            │ │   ╲        ╱                        ▼
            │ │     ╲    ╱                  ┌──────────────┐
            │ │      YES                    │  ISSUE ALARM │ ～ S323
            │ │       │                     └──────────────┘
            │ │       ▼                            │
            │ │ ┌──────────────┐                   │
            │ │ │  ISSUE ALARM │ ～ S325           │
            │ │ └──────────────┘                   │
            │ │       │                            │
            │ │       └──────────────┐             │
            │ │                      ▼             │
            │ │               ┌──────────────┐     │
            │ │               │ STOP MACHINE │ ～ S327
            │ │               └──────────────┘
            │ │                      │
            ▼ ▼◄────────────────────┘
        ( RETURN )
```

EP 4 752 654 A1

FIG. 14

REFERENCE MACHINING LOAD [N]

A' (B'): CORRECTED

α

A (B): BEFORE CORRECTION

tc

TIME t [msec]

32

FIG. 15

WITHOUT CORRECTION

FIG. 16

WITH CORRECTION

**EUROPEAN SEARCH REPORT**

Application Number

EP 25 21 0917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/378347 A1 (SATO TOMONORI [JP] ET AL) 31 December 2015 (2015-12-31) * paragraphs [0002] - [0146]; figures 1-6 * | 1-18 | INV. G05B19/406 G05B19/4065 |
| A | WO 2022/190155 A1 (FUJI CORP [JP]) 15 September 2022 (2022-09-15) * the whole document * | 1-18 | |
| A | US 2020/371500 A1 (OOTOMO YOUSUKE [JP]) 26 November 2020 (2020-11-26) * the whole document * | 1-18 | |
| A | US 2015/253759 A1 (NAGATO KAZUYOSHI [JP] ET AL) 10 September 2015 (2015-09-10) * the whole document * | 1-18 | |

**TECHNICAL FIELDS SEARCHED (IPC)**

G05B

The present search report has been drawn up for all claims

| Place of search | Date of completion of the search | Examiner |
|---|---|---|
| The Hague | 23 March 2026 | Sollazzo, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 0917

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2026

| Patent document cited in search report | Publication date | Patent family member(s) | Publication date |
|---|---|---|---|
| US 2015378347 A1 | 31-12-2015 | BR 112015025405 A2 | 18-07-2017 |
| | | CN 105122160 A | 02-12-2015 |
| | | DE 112013006799 T5 | 26-11-2015 |
| | | JP 5905158 B2 | 20-04-2016 |
| | | JP WO2014167636 A1 | 16-02-2017 |
| | | US 2015378347 A1 | 31-12-2015 |
| | | WO 2014167636 A1 | 16-10-2014 |
| WO 2022190155 A1 | 15-09-2022 | JP WO2022190155 A1 | 15-09-2022 |
| | | WO 2022190155 A1 | 15-09-2022 |
| US 2020371500 A1 | 26-11-2020 | CN 111983972 A | 24-11-2020 |
| | | DE 102020204952 A1 | 26-11-2020 |
| | | JP 7740864 B2 | 17-09-2025 |
| | | JP 2020191043 A | 26-11-2020 |
| | | US 2020371500 A1 | 26-11-2020 |
| US 2015253759 A1 | 10-09-2015 | CN 104768707 A | 08-07-2015 |
| | | JP 5987062 B2 | 06-09-2016 |
| | | JP WO2014068644 A1 | 08-09-2016 |
| | | US 2015253759 A1 | 10-09-2015 |
| | | WO 2014068644 A1 | 08-05-2014 |

EPO FORM P0459

For more details about this annex : see Official Journal of the European Patent Office, No. 12/82

**EP 4 752 654 A1**

**REFERENCES CITED IN THE DESCRIPTION**

**Patent documents cited in the description**

- JP 2021064128 A